# EUROPEAN PATENT APPLICATION

(11) **EP 1 349 224 A1**
(43) Date of publication of application: **01.10.2003**
(21) Application number: 01999980.4
(22) Date of filing: 04.12.2001
(51) Int. Cl.: H01M 8/04, H01M 8/06, H01M 8/10

(54) **POLYELECTROLYTE TYPE FUEL CELL, AND OPERATION METHOD THEREFOR**

(30) Priority: 05.12.2000 JP 2000369565; 30.05.2001 JP 2001162215
(71) Applicant: MATSUSHITA ELECTRIC INDUSTRIAL CO., LTD., Kadoma-shi, Osaka 571-8501 (JP)
(72) Inventor: HATOH, Kazuhito, Osaka-shi, Osaka 536-0015 (JP); NIIKURA, Junji, Hirakata-shi, Osaka 573-0157 (JP); KANBARA, Teruhisa, Ikeda-shi, Osaka 563-0021 (JP)
(74) Representative: Grünecker, Kinkeldey, Stockmair & Schwanhäusser Anwaltssozietät
(86) International application number: JP0110568
(87) International publication number: WO02047190

(57) **Abstract**

To provide a polyelectrolyte type fuel cell including single cells having a pair of electrodes placed at positions sandwiching a hydrogen ion polyelectrolyte membrane and supplying/exhausting means of supplying/exhausting a fuel gas to/from one of the electrodes and supplying/exhausting an oxidizer gas to/from the other of the electrodes, which are stacked one atop another through a conductive separator and have circulating means of circulating a cooling medium of cooling the electrodes, characterized in that at least one selected from among an amount of the fuel gas supplied, an amount of the fuel gas humidified, an amount of the oxidizer gas supplied, an amount of the oxidizer gas humidified, a flow rate or temperature of the cooling medium or an output current value of the polyelectrolyte type fuel cell is adjusted in such a way that an inlet temperature (Twin (°C)) of the cooling medium or an outlet temperature of the cooling medium (Twout (°C)) becomes 60°C or higher.

## Description

### Technical Field

The present invention relates to a polyelectrolyte type fuel cell operating at room temperature used for a portable power supply, electric vehicle power supply, household cogeneration system, etc. and a method of operating the same.

### Background Art

A polyelectrolyte type fuel cell generates electric power and heat simultaneously by allowing a fuel gas containing hydrogen to electrochemically react with an oxidizer gas containing oxygen such as air. The polyelectrolyte type fuel cell has a following structure. First, an electrode catalyst layer whose main ingredient is carbon powder containing a platinum-based metal catalyst is formed on both sides of a polyelectrolyte membrane which selectively transports hydrogen ions. Then, an electrode diffusion layer having both permeability of fuel gas or oxidizer gas and electronic conductivity is formed on an outer surface of this catalyst layer and the catalyst layer is combined with this diffusion layer to create an electrode. The solid structure of this electrode and electrolyte membrane is called a MEA.

Then, to prevent a gas to be supplied from leaking to the outside or prevent the fuel gas and oxidizer gas from mixing together, a gasket is provided around the electrode with the polyelectrolyte membrane inserted in between. This gasket is sometimes preassembled integrated with the electrode and polyelectrolyte membrane and the resulting assembly may also be called a MEA.

Outside the MEA, a conductive separator plate is provided to mechanically fix the MEA and electrically connect neighboring MEAs in series. On the part contacting the MEA of the separator plate, a gas channel is formed to supply a reactive gas to the electrode plane and carry away a generated gas or excessive gas. The gas channel can also be provided aside from the separator plate, but it is a general practice that a groove is formed on the surface of the separator and this is used as the gas channel.

Normally, when a fuel cell is actually used, a multi-layer structure is adopted in which a plurality of the above described single cells are piled one atop another. While a fuel cell is in operation, not only power generation but also heating occurs. In the case of a multi-layer cell, a cooling plate is provided for every 1 to 2 single cells to keep the cell temperature constant and use the generated heat energy in the form of hot water, etc. at the same time. The cooling plate generally has a structure in that a heat medium such as cooling water circulates inside a thin metal plate. However, there is also a structure in that a cooling plate is constructed by providing a channel on the back of the separator making up a single cell, that is, the side on which cooling water flows. In that case, O-rings or gaskets are also required to seal a heat medium such as cooling water. In this sealing, sufficient conductivity should be secured in the area between above and below the cooling plate by fully crushing the O-ring, etc.

Such a multi-layer cell requires a supply/exhaust hole called a manifold for a fuel gas to/from each single cell. For this, a so-called internal manifold type is generally used which secures a supply/exhaust hole for cooling water inside the multi-layer cell.

Whether an internal manifold type is used or an external manifold type is used, it is necessary to pile a plurality of single cells containing a cooling section in one direction, provide a pair of end plates on both sides thereof and fix the two end plates using a fastening rod. As a fastening system, it is preferable to fasten the single cell as uniformly as possible within the plane. From the standpoint of mechanical strength, a metallic material such as stainless steel is normally used for the end plates and fastening rod. These end plates, fastening rod and multi-layer cell should have such a structure that they are mutually electrically insulated using insulating plates so that currents do not leak to the outside through the end plates. For the fastening rod, there are also various proposed systems such as a method of passing the fastening rod through a through hole inside the separator or a method of fastening the entire multi-layer cell and the end plates all together using a metal belt.

In the case of the above-described polyelectrolyte type fuel cell, an electrolyte membrane containing water functions as an electrolyte, and therefore it is necessary to supply a humidified fuel gas and oxidizer gas. Furthermore, at least within a temperature range of up to 100°C, ion conductivity increases as the water content of the polyelectrolyte membrane increases, thereby reducing internal resistance of the cell and providing high performance. Thus, increasing the water content in the electrolyte membrane requires the gas to be highly humidified and supplied.

However, supplying a highly humidified gas at a cell operating temperature or higher causes condensation to be produced inside the cell, causes water droplets to prevent a smooth supply of gas, and water generated by power generation on the air electrode side that supplies the oxidizer gas reduces the efficiency of removing water generated, causing the problem of reducing the cell performance. For this reason, the gas is normally supplied after being humidified to a dew point which is slightly lower than the cell operating temperature.

Examples of a generally used method of humidifying a supply gas include a bubbler humidification system whereby a supply gas is bubbled into deionized water whose temperature is kept to a predetermined value and humidified and a membrane humidification system whereby deionized water whose temperature is kept to a predetermined value flows on one side of a membrane where water content of the electrolyte membrane can easily move and the supply gas flows on the other side to be humidified. At the time of using a gas obtained by steam-reforming fossil fuel such as methanol or methane as a fuel gas, the reformed gas contains steam, and therefore humidification may not be required.

The humidified fuel gas or oxidizer gas is supplied to the polyelectrolyte type fuel cell for power generation. At this time, a current density distribution is generated within a single plane of any single cell in the cell multi-layer body. That is, the fuel gas is humidified by a certain amount at a gas inlet and then supplied, but hydrogen in the fuel gas is consumed by power generation, which causes a phenomenon that the hydrogen partial pressure increases and steam partial pressure decreases toward the gas upstream side, while the hydrogen partial pressure decreases and steam partial pressure increases toward the gas downstream side.

Furthermore, the oxidizer gas is also humidified by a predetermined amount at the gas inlet and then supplied. However, since oxygen in the oxidizer gas is consumed by power generation and water is generated by power generation, there caused a phenomenon that the oxygen partial pressure increases and steam partial pressure decreases toward the gas upstream side, while the oxygen partial pressure decreases and steam partial pressure increases toward the gas downstream side. Furthermore, the temperature of cooling water for cooling the cell decreases toward the inlet and increases toward the outlet, which generates a temperature distribution within a single plane of the cell. Fortheabove-described reason, a current density distribution (performance distribution) is generated within a single plane of the cell.

Furthermore, if heterogeneity of the hydrogen and steam partial pressures in the fuel gas within a single plane of the cell, heterogeneity of oxygen and steam partial pressures in the oxidizer gas or temperature distribution, etc. generated for the above-described reasons increases extremely and deviates from optimal conditions, then an extreme dryness (overdry) or extreme wetness (overflooding) condition is provoked, which will not only produce a current density distribution but also prevent the cell from functioning as an electric cell.

Furthermore, the heterogeneity of the hydrogen and steam partial pressures in the fuel gas within a single plane of the cell, heterogeneity of the oxygen and steam partial pressures in the oxidizer gas or temperature distribution, etc. generated for the above-described reasons may also produce a phenomenon in which overdry coexists with overflooding within a single plane of the cell.

When the cell is composed of a high number of layers, if the above-described problem occurs in some of the plurality of cell layers, these malfunctioning cells will interfere with the operation of the entire multi-layer cell. That is, if some cells of the multi-layered cell fall into overflooding, a loss of the pressure for a gas supply in the overflooded cells will increase. Since the gas supply manifold is common within the multi-layer cell, the gas will not smoothly flow through the overflooded cells, resulting in further overflooding. On the contrary, if some cells of the multi-layered cell fall into overdry, a loss of the pressure for a gas supply in the overdried cells will decrease. Thus, the gas will easily flow through the overdried cells, resulting in further overdry.

Especially, when overflooding occurs, the phenomenon of insufficient gas flow for the above-described reasons advances to such an extent that it is no longer possible to secure the amount of gas flow necessary for a cell reaction to take place. In the case of a multi-layer cell, even if only a few cells of the layered cell have such problems, since the total voltage of the cell stack as a whole remains high, currents forcibly flow into those non-conforming cells, causing a phenomenon of polarity inversion on those non-conforming cells. If this phenomenon occurs on the air electrode side, this simply causes a voltage drop in the cell on the air electrode side, which will not produce any major problem as far as this potential drop is not an extreme one. However, if a shortage of fuel gas due to overflooding occurs, the potential on the fuel electrode side increases, causing a problem that carbon powder making up the electrode catalyst layer is oxidized and leaches out. Leach-out of carbon powder, which is an irreversible reaction, may cause a problem that the electric cell will be damaged irrecoverably.

The above-described problems are often attributable to the fact that the steam partial pressure in the gas increases toward the gas outlet than the gas inlet on both the fuel electrode side that supplies the fuel gas and the air electrode side that supplies the oxidizer gas.

Thus, as described in National Publication of International Patent Application No. 9-511356, an attempt has been made to reduce overflooding at the air electrode downstream section and reducing a current density distribution within the single plane of the cell by matching the direction of oxidizer gas flow to the direction of cooling water flow and making the temperature of the oxidizer gas downstream section higher than that of the upstream section using a temperature distribution of the cooling water.

However, when a gas is supplied to the cell, since there is unavoidably pressure loss at the gas inlet, there is also a pressure distribution of the supply gas inside the cell, which causes the inlet side to always have a higher pressure. On the air electrode side, water is generated and the steam partial pressure increases toward the outlet side, but due to an influence of the pressure distribution, relative humidity does not always increase toward the outlet side depending on the cell operating condition. Thus, generating power from the cell under an operating condition under which relative humidity increases toward the inlet side, matching the direction of oxidizer gas flow to the direction of cooling water flow and making the temperature of the oxidizer gas downstream section higher than that of the upstream section using a temperature distribution of the cooling water may accelerate overflooding on the gas inlet side, producing an adverse effect.

Thus, operating the fuel cell requires systems such as a gas supply system, gas humidification system, cooling water supply system, heat exhaust/recovery system and control system, and according to circumstances, power management system such as converting DC to AC may be required due to power to be output with DC. Considering the overall efficiency of the system, compactness and cost, etc., the lower the dew point of a gas to be supplied to the fuel cell, the more advantageous it is. However, for the above-described reasons, lowering the dew point of the supply gas deteriorates the performance of the fuel cell. Furthermore, it has been discovered that lowering the dew point of the oxidizer gas to be supplied in particular would accelerate deterioration of a fuel cell characteristic with time.

### Disclosure of the Invention

The present invention has been achieved by taking into account the above described situations and it is an object of the present invention to provide a polyelectrolyte type fuel cell having an excellent initial characteristic and life characteristic and the method of operating the same.

A first invention of the present invention (corresponding to Claim 1) is a polyelectrolyte type fuel cell comprising:
single cells having a pair of electrodes placed at positions sandwiching a hydrogen ion polyelectrolyte membrane and supplying/exhausting means of supplying/exhausting a fuel gas to/from one of said electrodes and supplying/exhausting an oxidizer gas to/from the other of said electrodes, which are stacked one atop another through a conductive separator; and
circulating means of circulating a cooling medium for cooling said electrodes, wherein
said polyelectrolyte type fuel cell adjusts at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell so that an inlet temperature (Twin (°C)) of said cooling medium or an outlet temperature (Twout (°C)) of the cooling medium becomes 60°C or higher.

A second invention of the present invention (corresponding to Claim 2) is the polyelectrolyte type fuel cell according to the first invention of the present invention,
wherein at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that a total flow rate of the fuel gas (Vain (NL/min), including steam) to be supplied to the fuel gas inlet of said polyelectrolyte type fuel cell, a hydrogen gas content (Δpah (atm), including steam) in said fuel gas supplied to said fuel gas inlet, a partial pressure (ΔPain (atm)) of steam contained in said fuel gas to be supplied to said fuel gas inlet, a fuel gas utilization rate (Uf, where 0 ≤ Uf ≤ 1) of said polyelectrolyte type fuel cell, a dew point (Rain (°C) ) of steam contained in said fuel gas supplied to said fuel gas inlet, a cell temperature (Tain (°C)) of said fuel gas inlet and a cell temperature (Taout (°C) ) of the fuel gas outlet are set to satisfy Rain < Tain.

A third invention of the present invention (corresponding to Claim 3) is the polyelectrolyte type fuel cell according to the second invention of the present invention,
characterized in that at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that Rain ≤ (Tain-5) is satisfied.

A fourth invention of the present invention (corresponding to Claim 4) is the polyelectrolyte type fuel cell according to the second invention of the present invention,
characterized in that at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that (Tain-15) ≤ Rain ≤ (Tain-5) is satisfied.

A fifth invention of the present invention (corresponding to Claim 5) is the polyelectrolyte type fuel cell according to the second invention of the present invention,
characterized in that at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that Raout ≤ (Taout+5) is satisfied, where Raout (°C) is a dew point in the vicinity of the fuel gas outlet obtained an approximate expression 22.921Ln (ΔPaout × 760)-53.988 from the steam partial pressure (ΔPaout (atm)) in the vicinity of the fuel gas outlet calculated by Δpain/ (1-Uf × ΔPah).

A sixth invention of the present invention (corresponding to Claim 6) is the polyelectrolyte type fuel cell according to any one of the first to the fifth inventions of the present invention,
wherein said fuel gas and said oxidizer gas of said conductive separator circulate in the same direction, at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that the cell temperature (Tcin (°C)) of said oxidizer gas supply section or the cell temperature (Tain (°C)) of said fuel gas supply section or the inlet temperature (Twin (°C)) of the coolingmedium or the outlet temperature (Twout (°C)) of the cooling medium becomes 60°C or higher, and
an oxidizer gas utilization rate (Uo, where 0 ≤ Uo ≤ 1) of said polyelectrolyte type fuel cell, a dew point (Rcin) of steam contained in said oxidizer gas supplied to the oxidizer gas inlet, the cell temperature (Tcin (°C)) of the oxidizer gas supply section and a cell temperature (Tcout) of the oxidizer gas outlet are set so that Rcin is kept at a temperature lower than Twin or Twout by 10°C or more.

A seventh invention of the present invention (corresponding to Claim 7) is the polyelectrolyte type fuel cell according to the fifth invention of the present invention,
wherein said Rein is kept at a temperature lower than Twin or Twout by 20°C or more.

An eighth invention of the present invention (corresponding to Claim 8) is the polyelectrolyte type fuel cell according to the sixth invention of the present invention,
characterized in that the amount of said oxidizer gas supplied is adjusted in such a way that said Uo satisfies Uo ≥ 0.5 (50%).

A ninth invention of the present invention (corresponding to Claim 9) is the polyelectrolyte type fuel cell according to the sixth invention of the present invention,
characterized in that said Rain is higher than said Rcin by 10°C or more and lower than said Twin or said Tain or said Taout or said Tcin or said Tcout.

A tenth invention of the present invention (corresponding to Claim 10) is the polyelectrolyte type fuel cell according to the sixth invention of the present invention,
characterized in that said Uo is set to 0.6 (60%) or greater and 0.9 (90%) or smaller.

An eleventh invention of the present invention (corresponding to Claim 11) is the polyelectrolyte type fuel cell according to any one of the first to the tenth inventions of the present invention,
wherein said fuel gas and said oxidizer gas of said conductive separator circulate from top down with respect to gravity.

A twelfth invention of the present invention (corresponding to Claim 12) is the polyelectrolyte type fuel cell according to any one of the first to the eleventh inventions,
wherein the fuel gas and oxidizer gas exhausted from a cathode and anode are substantially left open to a normal pressure except an unavoidable portion corresponding to pressure loss of a portion where the fuel gas and oxidizer gas circulate.

A thirteenth invention of the present invention (corresponding to Claim 13) is the polyelectrolyte type fuel cell according to the sixth invention of the present invention,
characterized in that a current value extracted from the cell is controlled in connection with said Uo so that said Uo is increased as said current value decreases.

A fourteenth invention of the present invention (corresponding to Claim 14) is the polyelectrolyte type fuel cell according to the sixth invention of the present invention,
characterized in that said Twin or said Twout or said Tain or said Taout or said Tcin or said Tcout is set to 70°C or higher and 95°C or lower.

A fifteenth invention of the present invention (corresponding to Claim 15) is the polyelectrolyte type fuel cell according to any one of the first to the fourteenth inventions of the present inveniton,
wherein a dry-based composition of said fuel gas contains a carbon dioxide gas of 15 volume % or more and 45 volume % or less or a fuel utilization rate is 0.7 (70%) or more.

A sixteenth invention of the present invention (corresponding to Claim 16) is a method of operating a polyelectrolyte type fuel cell comprising:
single cells having a pair of electrodes placed at positions sandwiching a hydrogen ion polyelectrolyte membrane and supplying/exhausting means of supplying/exhausting a fuel gas to/from one of said electrodes and supplying/exhausting an oxidizer gas to/from the other of said electrodes, which are stacked one atop another through a conductive separator; and
circulating means of circulating a cooling medium of cooling said electrodes, wherein
polyelectrolyte type fuel cell adjusts at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell so that an inlet temperature (Twin (°C)) of said cooling medium or an outlet temperature (Twout (°C)) of the cooling medium becomes 60°C or higher.

A seventeenth invention of the present invention (corresponding to Claim 17) is the method of operating a polyelectrolyte type fuel cell according to the sixteenth invention of the present invention,
wherein said fuel gas and said oxidizer gas of said conductive separator circulate in the same direction,
at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that the cell temperature (Tcin (°C)) of said oxidizer gas supply section or the cell temperature (Tain (°C)) of said fuel gas supply section or the inlet temperature (Twin (°C)) of the cooling medium or the outlet temperature (Twout (°C)) of the cooling medium becomes 60°C or higher, and
an oxidizer gas utilization rate (Uo, where 0 ≤ Uo ≤ 1) of said polyelectrolyte type fuel cell, a dew point (Rcin) of steam contained in said oxidizer gas supplied to the oxidizer gas inlet, the cell temperature (Tcin (°C)) of the oxidizer gas supply section and a cell temperature (Tcout) of the oxidizer gas outlet are set so that Rcin is kept at a temperature lower than Twin or Twout by 10°C or more.

### Brief Description of the Drawings

FIG. 1 illustrates a configuration of an air electrode side separator of a polyelectrolyte type fuel cell according to Embodiment 2-1 of the present invention;
FIG. 2 illustrates a configuration of a fuel electrode side separator of the polyelectrolyte type fuel cell according to Embodiment 2-1 of the present invention;
FIG. 3 illustrates a configuration of a cooling water side separator of the polyelectrolyte type fuel cell according to Embodiment 2-1 of the present invention;
FIG. 4 illustrates a configuration of an air electrode side separator of a polyelectrolyte type fuel cell according to Embodiment 2-3 of the present invention;
FIG. 5 illustrates a configuration of a fuel electrode side separator of the polyelectrolyte type fuel cell according to Embodiment 2-3 of the present invention;
FIG. 6 illustrates a configuration of a cooling water side separator of the polyelectrolyte type fuel cell according to Embodiment 2-3 of the present invention;
FIG. 7 illustrates a configuration of an air electrode side separator of the polyelectrolyte type fuel cell according to Embodiment 2-3 of the present invention;
FIG. 8 illustrates a configuration of a fuel electrode side separator of the polyelectrolyte type fuel cell according to Embodiment 2-3 of the present invention; and
FIG. 9 illustrates a configuration of a cooling water side separator of the polyelectrolyte type fuel cell according to Embodiment 2-3 of the present invention.

### [Description of Symbols]

1 Oxidizer gas inlet manifold hole
2 Oxidizer gas outlet manifold hole
3 Fuel gas inlet manifold hole
4 Fuel gas outlet manifold hole
5 Cooling water inlet manifold hole
6 Cooling water outlet manifold hole
7 Oxidizer gas channel groove
8 Fuel gas channel groove
9 Cooling water channel groove
10 Connection sealing section

### Best Mode for Carrying out the Invention

Embodiments of the present invention will be explained below.

### (Embodiment 1-1)

First, a method of creating an electrode on which a catalyst layer is formed will be explained. Carbon black powder containing 50 weight % of platinum particles of 30 Å in average particle diameter was used as a cathode catalyst material. Furthermore, this carbon black powder containing 50 weight % of platinum-ruthenium alloy particles of 30 Å in average particle diameter was used as an anode catalyst material. Perfluorocarbon sulfonate having a chemical structure shown in Chemical Formula 1 was used as a hydrogen ion conductive polyelectrolyte. 20 weight % of this catalyst material was mixed with 80 weight % of an ethanol solution in which 9 weight % hydrogen ion conductive polyelectrolyte was dissolved by means of ball mill to prepare electrode creation ink.

Then, the 9 weight % hydrogen ion conductive polyelectrolyte was cast onto a smooth glass substrate and dried to obtain a hydrogen ion conductive polyelectrolyte membrane of 30 µm in average membrane thickness. Then, on both sides of this ion conductive polyelectrolyte membrane, the above-described electrode creation ink was printed in an electrode shape using a screen printing method to obtain a polyelectrolyte membrane with a catalyst layer.

On the other hand, water repellent finish was applied to carbon paper to be a diffusion layer. A carbon nonwoven fabric cloth of 16 cm × 20 cm in size and 360 µm in thickness (TGP-H-120: manufactured by Toray Industries, Inc.) was impregnated with aqueous dispersion containing fluorocarbon resin (Neoflon ND1: manufactured by Daikin Industries, Ltd.) and then dried and heated at 400°C for 30 minutes to give it a water repellent characteristic.

Then, the carbon black powder was mixed with the aqueous dispersion of PTFE powder to make water repellent layer creation ink. A water repellent layer was formed by applying the water repellent layer creation ink to one side of the carbon nonwoven cloth which is the diffusion layer using the screen printing method. At this time, part of the water repellent layer was buried in the carbon nonwoven cloth and the rest of the water repellent layer existed as if floating on the surface of the carbon nonwoven cloth. Then, the diffusion layer with a pair of water repellent layers was coupled with both the front and back sides of the polyelectrolyte membrane with the catalyst layer so that the water repellent layer would contact the catalyst layer on the polyelectrolyte membrane by means of hot press, and this was used as an electrode/membrane assembly.

This electrode/membrane assembly was subjected to heat treatment in a saturated steam atmosphere at 120°C for one hour to fully develop the hydrogen ion conductive channel. Here, it was discovered that when the hydrogen ion conductive polyelectrolyte expressed in Chemical Formula 1 was subjected to heat treatment in a relatively high temperature humid atmosphere at approximately 100°C or higher, a hydrophilic channel, which is the hydrogen ion conductive channel, developed and an inverse micelle structure was formed.

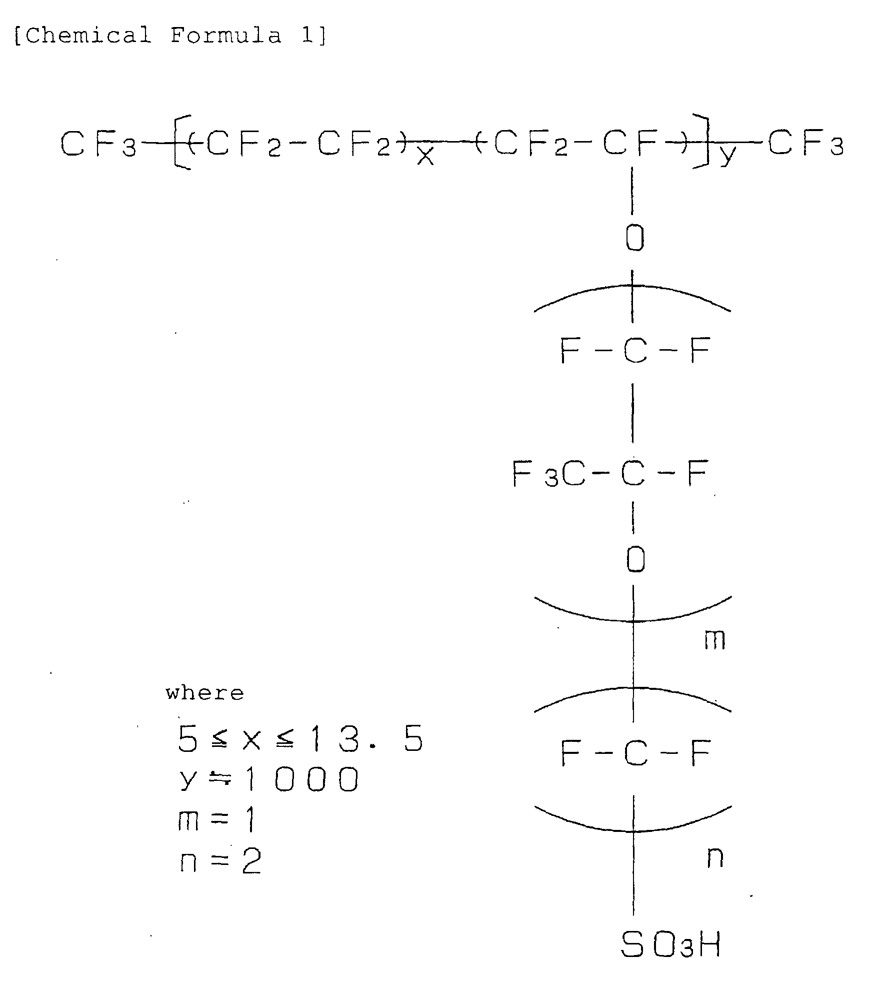

Thus, an electrode/membrane assembly was obtained which included a conductor carrying an electrode reaction catalyst with an electrode having external dimensions of 16 cm × 20 cm coupled with the both the front and back of the hydrogen ion polyelectrolyte membrane having external dimensions of 20 cm × 32 cm.

Then, a rubber gasket plate was coupled with the perimeter of the polyelectrolyte membrane of the electrode/membrane assembly and a manifold hole for circulating the cooling water, fuel gas and oxidizer gas was formed, and this was used as a MEA.

Then, a separator made up of a resin impregnated graphite plate having external dimensions of 20 cm × 32 cm and 1.3 mm in thickness provided with a gas channel and cooling water channel both having depths of 0.5 mm was prepared. Using two of these separators, one separator with an oxidizer gas channel formed on one side of the MEA sheet was overlaid on the other separator with a fuel gas channel formed on the back, and this was used as a single cell. After these two single cells are stacked, this two-layered cell is sandwiched by the separators in which a groove for a cooling water channel is formed, this pattern is repeated to create a cell stack of 100 layered cells. At this time, both ends of the cell stack were fixed by a stainless steel current collector plate, insulator of an electric insulating material and further an end plate and fastening rod. The fastening pressure at this time was set to 10 kgf/cm² per area of the separator .

The temperature (Tain) in the vicinity of the fuel gas inlet of the polyelectrolyte type fuel cell of this embodiment manufactured in this way was kept to 60°C to 85°C, a steam-reformed methane gas whose humidity and temperature were regulated to adjust its dew point (steam partial pressure) and whose carbon monoxide concentration was reduced to 50 ppm or below was supplied to the fuel electrode side, and air humidified and heated so as to have a dew point of 50°C to 80°C was supplied to the air electrode side. Or dry air was supplied thereto. The composition of the dry-based methane reformed gas in a steady operating state at this time was H₂: approximately 79%, CO₂: approximately 20%, N₂: approximately 1%, CO: approximately 20 ppm.

It was discovered that this embodiment was more effective in the case where the fuel gas included carbon dioxide which has lower diffusivity than hydrogen or for the case where the fuel utilization rate was high and a better gas distribution characteristic was required.

Consecutive power generation tests were conducted on this cell under a condition with a fuel utilization rate of 0 . 85 (85%) , oxygen utilization rate of 0.5 (50%) , current density of 0.3 A/cm², 0.5 A/cm² and 0.7 A/cm², and a time variation of its output characteristic was measured.

Table 1 shows the results of power generation tests in this embodiment.

For comparison, an example of power generation based on an operating condition, not based on this embodiment is shown in Table 2.

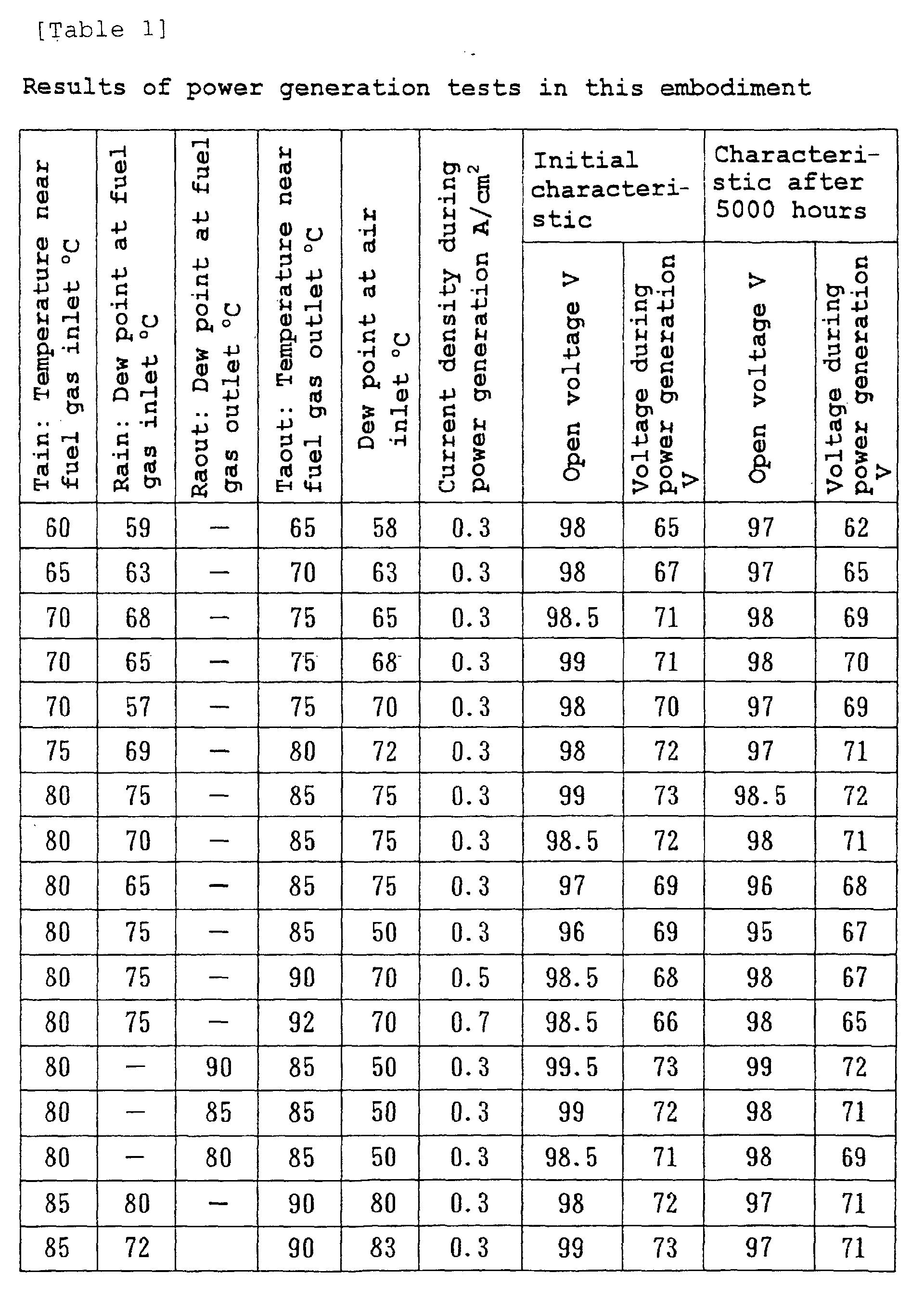

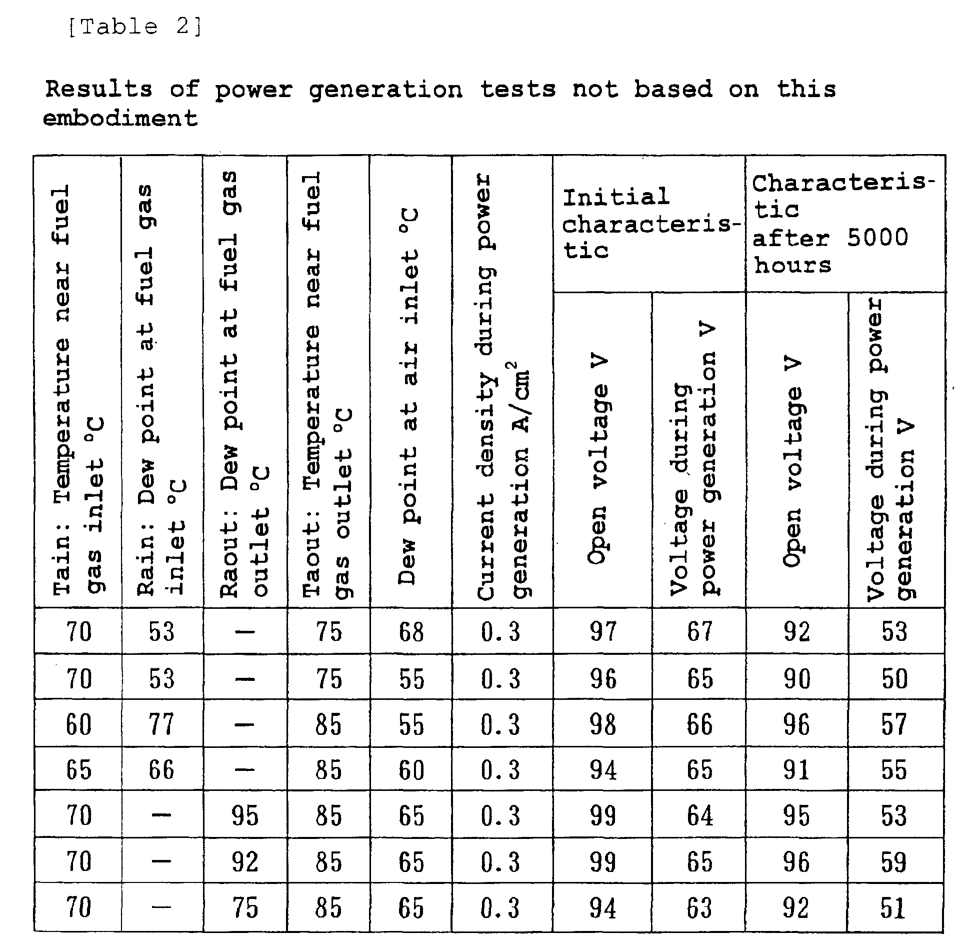

Then, other embodiments of the present invention will be explained below.

Before explaining the embodiments, a summary of the present invention will be given. The present invention is a polyelectrolyte type fuel cell with a cooling water inlet temperature or cell temperature being 60°C or higher and a dew point at the inlet of an oxidizer gas to be supplied to the electrode being lower than the temperature at the cooling water inlet or cell temperature by 20°C or more, characterized in that the substantial upstream section of the fuel gas and the substantial upstream section of the oxidizer gas are oriented in the same direction while the substantial downstream section of the fuel gas and the substantial downstream section of the oxidizer gas are oriented in the same direction.

Or the present invention is a polyelectrolyte type fuel cell with a temperature at the cooling water inlet or cell temperature being 60°C or higher and a dew point at the inlet of an oxidizer gas to be supplied to an electrode being lower than the temperature at the cooling water inlet or cell temperature by 20°C or more, characterized in that the flow rate of the oxidizer gas supplied is adjusted and supplied so that the utilization rate of the oxidizer gas is 60% or more.

Or the present invention is a polyelectrolyte type fuel cell with a temperature at the cooling water inlet or cell temperature being 60°C or higher and a dew point at the inlet of an oxidizer gas to be supplied to the electrode being lower than a temperature at the cooling water inlet or cell temperature by 20°C or more, with the fuel gas and oxidizer gas exhausted from the electrode except an unavoidable portion corresponding to pressure loss in a heat exchanger and piping, etc. substantially left open to a normal pressure, characterized in that the flow rate of the oxidizer gas supplied is adjusted and supplied so that the utilization rate of the oxidizer gas is 60% or more.

The present invention is preferably a polyelectrolyte type fuel cell characterized in that a dew pint at the inlet of the fuel gas supplied to the electrode is higher than a dew pint at the inlet of the oxidizer gas by 10°C or more and equal to or lower than a temperature at the cooling water inlet or cell temperature.

The present invention is more preferably a polyelectrolyte type fuel cell characterized in that the utilization rate of the oxidizer gas is 60% or higher and 90% or lower.

The present invention is more preferably a polyelectrolyte type fuel cell characterized in that the oxidizer gas supplied to the electrode is substantially not humidified.

The present invention is more preferably a polyelectrolyte type fuel cell characterized in that the utilization rate of the oxidizer gas is changed according to a current density so that a higher utilization rate of the oxidizer gas is used for a lower current density.

The present invention is more preferably a polyelectrolyte type fuel cell characterized in that a temperature at the cooling water inlet or cell temperature is 70°C or higher and 90% or lower.

Here, lowering the dew point of the oxidizer gas supplied to the air electrode side makes an overflooding phenomenon caused by over wetting inside the cell unlikely to occur while making an overdry phenomenon likely to occur. When an overdry phenomenon occurs, the cell performance deteriorates but from the standpoint of distribution of the gas supplied to the multi-layer cell, this allows the gas to be more easily distributed. Thus, realization of a high utilization rate of the oxidizer gas, which has been conventionally difficult, is now promoted, and it has been discovered that when supplying a highly humidified oxidizer gas, it is possible now to operate the cell with the oxidizer gas utilization rate, which has been generally set to approximately 30 to 50%, increased to 60% or more. However, from the standpoint of a gas distribution characteristic of the multi-layer cell, it has also been discovered that especially when supply loss in the oxidizer gas is reduced to 0.1 kgf/cm² or below, it is difficult to attain an oxidizer gas utilization rate of 90% or more.

It has also been discovered that when a countercurrent system is adopted so that the substantial upstream section of the fuel gas and the substantial downstream section of the oxidizer gas are oriented in the same direction, and the substantial downstream section of the fuel gas and the substantial upstream section of the oxidizer gas are oriented in the same direction and the dew point of the oxidizer gas supplied to the air electrode side is reduced, the water content in the humidified and supplied fuel gas would effectively move toward the oxidizer gas side through the polyelectrolyte membrane when the temperature at the cooling water inlet or average cell temperature is relatively as low as 60°C or below, providing a favorable operating condition.

However, in the case where the temperature at the cooling water inlet or cell temperature is relatively as high as 60°C or above, it has been discovered that lowering the dew point of the oxidizer gas supplied to the air electrode side according to the countercurrent system will cause the water content in the humidified, supplied fuel gas to move toward the oxidizer gas side near the outlet on the air electrode side close to the inlet, cause the fuel gas deprived of water content near the inlet to be further deprived of water content by the driest oxidizer gas near the inlet of the oxidizer gas on the air electrode side, and therefore the dew point at the outlet of the fuel gas decreased to a point substantially equal to the dew point at the inlet of the oxidizer gas, decrease the dew point of the fuel gas near the outlet excessively, which deteriorates the performance. At this time it has been discovered that although the dew point at the inlet of the fuel gas is higher than that of the oxidizer gas, the result of measuring the outlet dew point showed that the dew point of the oxidizer gas would become higher than that of the fuel gas.

Moreover, the following has been found: if the operation of the cell continues with the output dew point of the fuel gas remaining low, the electrode characteristic on the fuel electrode side is affected considerably by the humidified temperature (dew point), which causes the performance to continue to deteriorate resulting in excessive polarization on the fuel electrode side and leach-out of carbon carrier, which is one of the electrode component materials on the fuel electrode side, causing fatal and irreversible deterioration of performance.

Furthermore, in the case where a parallel current system is adopted so that the substantial upstream section of the fuel gas and the substantial upstream section of the oxidizer gas are oriented in the same direction and the substantial downstream section of the fuel gas and the substantial downstream section of the oxidizer gas are oriented in the same direction and when the dew point of the oxidizer gas supplied to the air electrode side is decreased and the temperature at the cooling water inlet or average cell temperature is relatively as low as 60°C or below, it has also been discovered that the water content of the humidified, supplied fuel gas would move toward the oxidizer gas side through the polyelectrolyte membrane and the dew point at the fuel gas outlet and that of the oxidizer gas would be homogenized to substantially the same temperature.

Therefore, in the case where the temperature at the cooling water inlet or average cell temperature is relatively as low as 60°C or below, it has been discovered that unless the utilization rate of the oxidizer gas is lowered as low as 40% or below, the dew point at the fuel gas outlet and that of the oxidizer gas would exceed the temperature at the cooling water inlet or average cell temperature, which would create a situation in which condensation would be produced inside the cell, making the operation difficult.

However, in the case where the temperature at the cooling water inlet or cell temperature is relatively as high as 60°C or above, it has been discovered that lowering the dew point of the oxidizer gas supplied to the air electrode side according to the parallel current system would cause the water content of the humidified, supplied fuel gas to move toward the oxidizer gas side through the polyelectrolyte membrane and the dew point at the fuel gas outlet and that of the oxidizer gas would be homogenized to substantially the same temperature.

At this time, it has been discovered that the saturated steam pressure of water increases more drastically as the temperature increases within a temperature range of up to 100°C, and therefore when the temperature at the cooling water inlet or cell temperature is relatively high, unless the oxidizer gas utilization rate is increased to as high as 60% or above, the cell interior would be dried up, failing to obtain sufficient performance. Furthermore, it has also been discovered that continuing to operate the cell with the oxidizer gas utilization rate being kept as low as 60% or below would cause the electrode characteristic on the fuel electrode side in particular to be considerably affected by the humidified temperature (dew point), which would cause the performance to continue to deteriorate gradually, finally resulting in excessive polarization on the fuel electrode side and leach-out of carbon carrier, which is one of the electrode component materials on the fuel electrode side, causing irreversible and fatal deterioration of performance.

Furthermore, it has been discovered that the above-described effect would be come more conspicuous when the temperature at the cooling water inlet or average cell temperature is 70°C or above because the saturated steam pressure of water increases drastically from around 70°C in particular. It has also been discovered that the above-described effect would be come more conspicuous when there is a greater difference between the temperature at the cooling water inlet or average cell temperature and dew point of the oxidizer gas to be supplied or there is a greater difference between the dew point of the fuel gas to be supplied and dew point of the oxidizer gas to be supplied and that for that reason, the above-described effect would become more conspicuous when the oxidizer gas is supplied with substantially no humidification applied thereto.

The respective embodiments of the present invention will be explained with reference to the attached drawings.

### (Embodiment 2-1)

First, a method of creating an electrode on which a catalyst layer is formed will be explained. Ketjenblack EC (AKZO Chemie, Inc., Holland) which consists of conductive carbon particles having an average primary particle diameter of 30 nm with 50 weight % of platinum particles having an average primary particle diameter of 30 Å added thereto was used a cathode catalyst material. Furthermore, the same Ketjenblack EC with 50 weight % of platinum-ruthenium alloy particles (weight ratio of 1:1) having an average primary particle diameter of 30 Å added thereto was used an anode catalyst material. Perfluorocarbon sulfonate having the chemical composition shown in Chemical Formula 1 was used as hydrogen ion conductive polyelectrolyte. This catalyst material of 20 weight % was ball-mill-mixed with an ethanol solution of 80 weight % into which hydrogen ion conductive polyelectrolyte of 10 weight % was dissolved to prepare electrode creation ink.

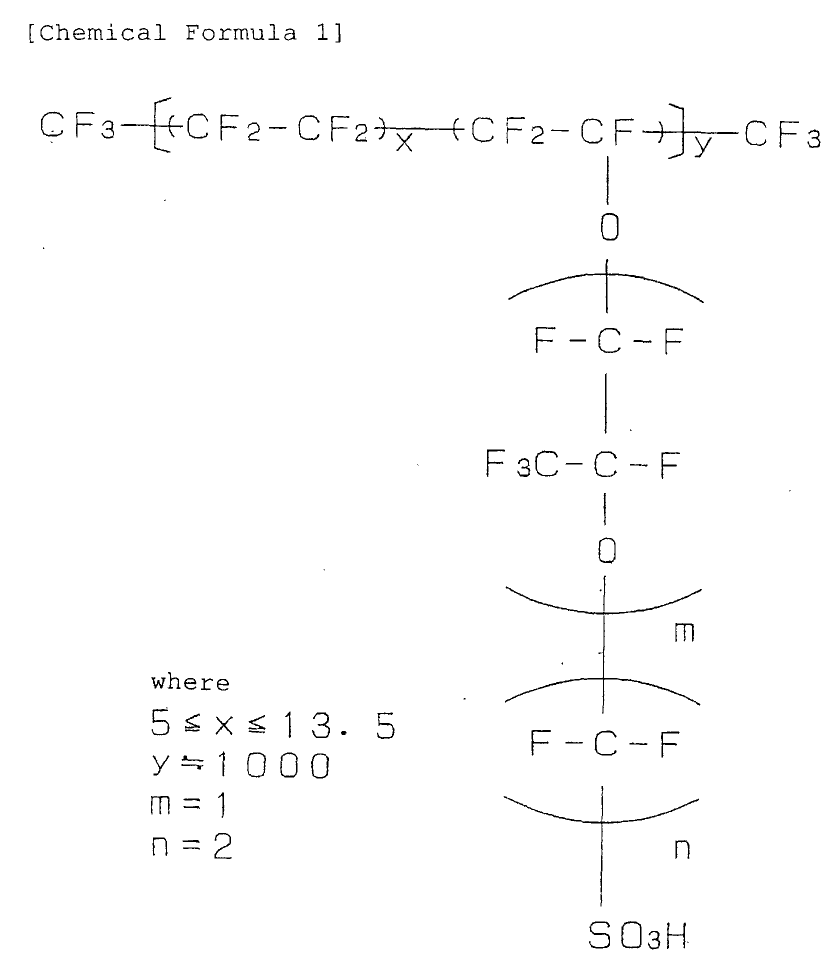

Then, an alcohol solution of hydrogen ion conductive polyelectrolyte of 20 weight % was cast onto a flat glass substrate and dried to obtain a hydrogen ion conductive polyelectrolyte membrane having an average membrane thickness of 30 µm. Then, the above described electrode creation ink was printed to both sides of this hydrogen ion conductive polyelectrolyte membrane in an electrode shape using a screen printing method to obtain a polyelectrolyte membrane with a catalyst layer.

On the other hand, carbon paper which would serve as a diffusion layer was subjected to water repellent treatment. A carbon nonwoven fabric cloth of 16 cm × 20 cm in size and 360 µm in thickness (TGP-H-120 : manufactured by Toray Industries, Inc.) was impregnated with aqueous dispersion containing fluorocarbon resin (Neoflon ND1: manufactured by Daikin Industries, Ltd.) and then dried and heated at 400°C for 30 minutes to give it a water repellent characteristic.

Then, the carbon black powder was mixed with the aqueous dispersion of PTFE powder to make water repellent layer creation ink. A water repellent layer was formed by applying the water repellent layer creation ink to one side of the carbon nonwoven cloth which is the diffusion layer using the screen printing method. At this time, part of the water repellent layer was buried in the carbon nonwoven cloth and the rest of the water repellent layer existed as if floating on the surface of the carbon nonwoven cloth. Then, the diffusion layer with a pair of water repellent layers was coupled with both the front and back of the polyelectrolyte membrane with the catalyst layer by means of hot press so that the water repellent layer would contact the catalyst layer on the polyelectrolyte membrane and this was used as an electrode/membrane assembly.

This electrode/membrane assembly was subjected to heat treatment in a saturated steam atmosphere at 120°C for one hour to fully develop the hydrogen ion conductive channel. Here, it was discovered that when the hydrogen ion conductive polyelectrolyte expressed in Chemical Formula 1 was subjected to heat treatment in a relatively high temperature humid atmosphere at approximately 100°C or above, a hydrophilic channel, which is the hydrogen ion conductive channel, developed and an inverse micelle structure was formed.

Thus, an electrode/membrane assembly was obtained which included a conductor carrying an electrode reaction catalyst with an electrode having external dimensions of 16 cm × 20 cm coupled with both the front and back of the hydrogen ion polyelectrolyte membrane having external dimensions of 20 cm × 32 cm.

Then, a rubber gasket plate was coupled with the perimeter of the polyelectrolyte membrane of the electrode/membrane assembly and a manifold hole for circulating the cooling water, fuel gas and oxidizer gas was formed and this was used as a MEA.

Then, the configuration of a separator will be explained. All the separators were 20 cm × 32 cm in size, 1 . 4 mm in thickness, provided with a gas channel and cooling water channel both having depths of 0.5 mm and prepared by cutting a resin impregnated graphite plate.

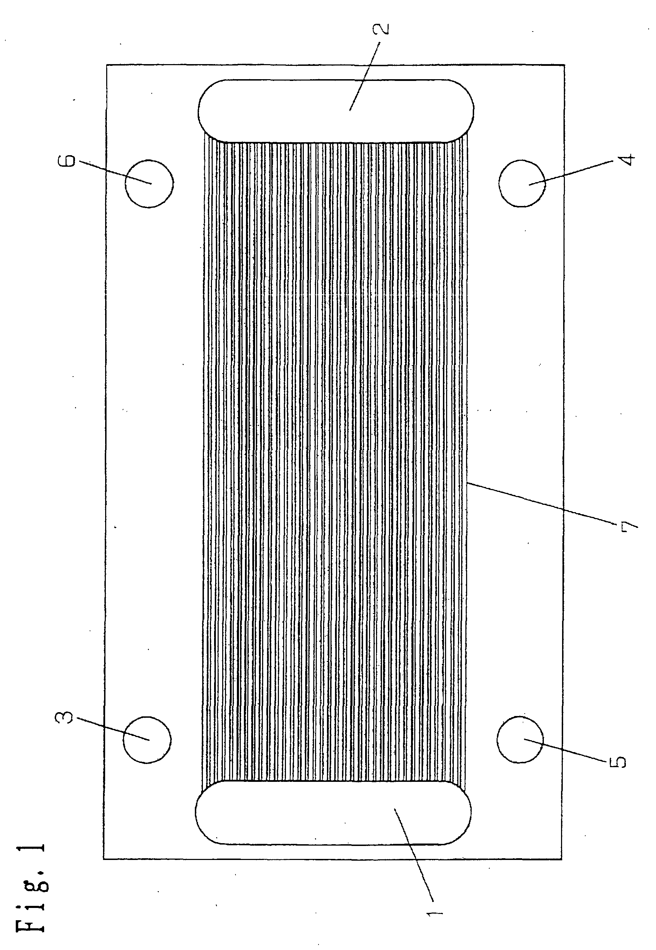

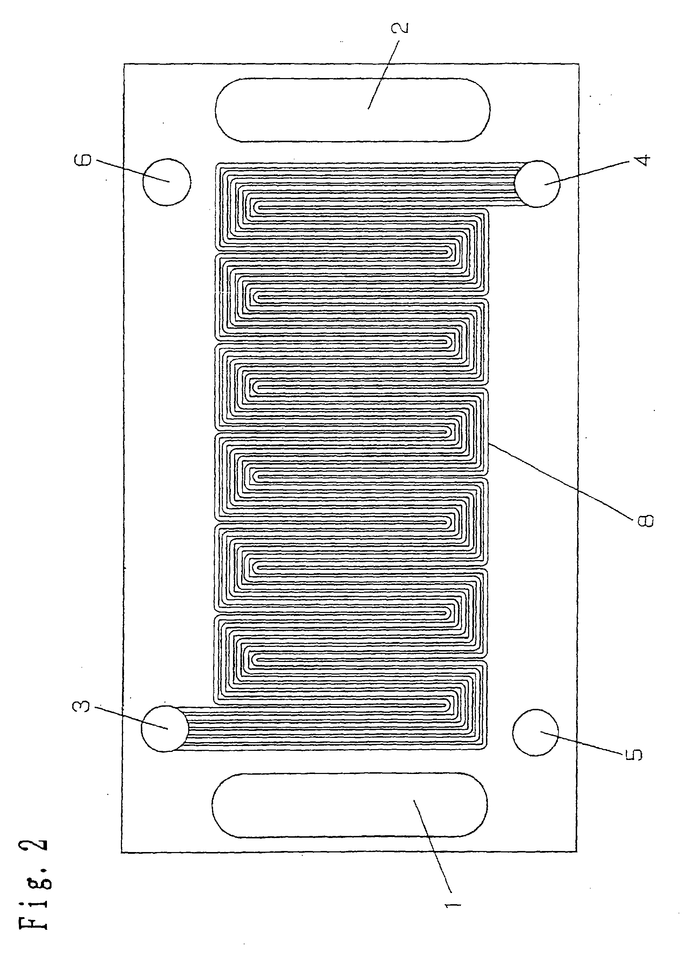

As a first separator, the process shown in FIG. 1 was applied to its one side and the process shown in FIG. 2 was applied to its other side to create a C/A separator with an oxidizer gas flowing on the one side and a fuel gas flowing on the other side.

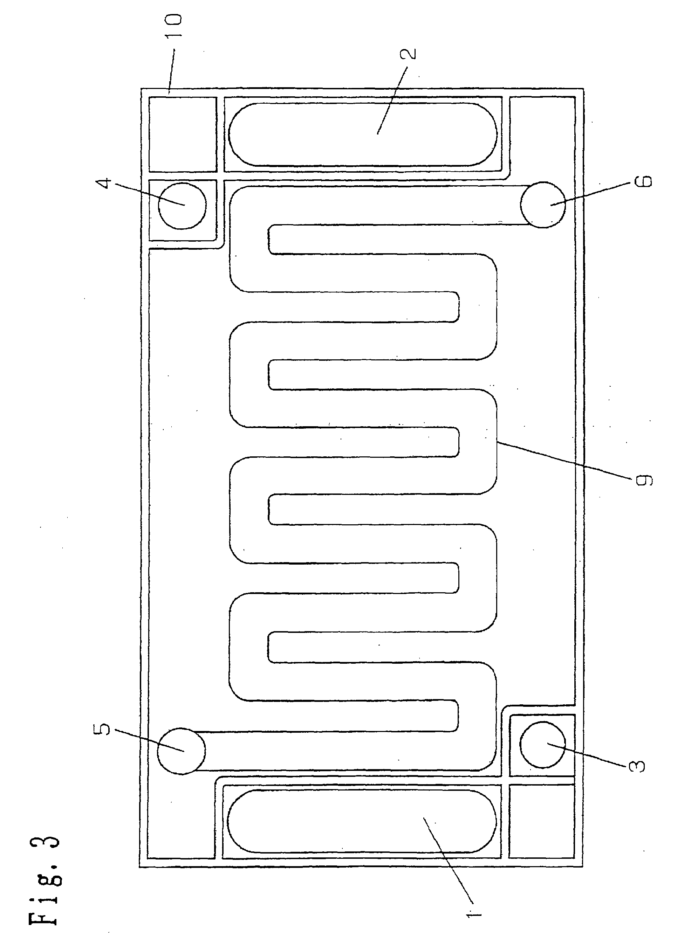

As a second separator, the process shown in FIG. 1 was applied to its one side and the process shown in FIG. 3 was applied to its other side to create a C/W separator with the oxidizer gas flowing on the one side and cooling water flowing on the other side. As a third separator, the process shown in FIG. 2 was applied to its one side and the process shown in FIG. 3 was applied to its other side to create an A/W separator with the fuel gas flowing on the one side and cooling water flowing on the other side. Here, the sides of the C/W separator and A/W separator on which the cooling water flows were pasted to each other with an adhesive applied in the connection sealing section (10) to create a C/W/A separator with the oxidizer gas flowing on the one side, the fuel gas flowing on the other side and cooling water flowing inside the separator.

Using two C/A separators, the side of the one separator on which an oxidizer gas channel is formed is pasted to one side of the MEA sheet and the side of the other separator on which a fuel gas channel is formed is pasted to the back of the MEA sheet to create a single cell. After these two single cells are stacked, this two-layered cell is sandwiched by the C/W/A separators in which a groove for the cooling water channel is formed, this pattern is repeated to create a cell stack of 100 layered cells. At this time, both ends of the cell stack were fixed by a stainless steel current collector plate, insulator of an electric insulating material and further an end plate and fastening rod. The fastening pressure at this time was set to 10 kgf/cm² per area of the separator.

Here, the system was constructed in such a way that the oxidizer gas would enter the oxidizer gas inlet manifold hole (1) , flow through the oxidizer gas channel groove (7), go out of the oxidizer gas outlet manifold hole (2), while the fuel gas would enter the fuel gas inlet manifold hole (3), flow through the fuel gas channel groove (8), go out of the fuel gas outlet manifold hole (4). Therefore, the setting was made so that the substantial upstream section of the fuel gas and the substantial upstream section of the oxidizer gas would be oriented in the same direction while the substantial downstream section of the fuel gas and the substantial downstream section of the oxidizer gas would be oriented in the same direction. Moreover, the setting was made so that the cooling water would enter the cooling water inlet manifold hole (5) , flow through the cooling water channel groove (9), go out of the cooling water outlet manifold hole (6). Therefore, the setting was made so that the substantial upstream section of the fuel gas, the substantial upstream section of the oxidizer gas and the substantial upstream section of the cooling water would be oriented in the same direction while the substantial downstream section of the fuel gas, the substantial downstream section of the oxidizer gas and the substantial downstream section of the cooling water would be oriented in the same direction. That is, the setting was made so that the oxidizer gas, fuel gas and cooling water would flow in parallel. Furthermore, heat exchangers were provided at the outlets of the respective gases so as to condense and recollect water content in the exhaust gases and release them into an atmosphere to minimize a back pressure applied. Furthermore, the fuel cell stack was set so that the substantial upstream sections of the oxidizer gas, fuel gas and cooling water, were located upside and their substantial downstream sections were located downside.

The temperature (Twin) in the vicinity of the cooling water inlet of the polyelectrolyte type fuel cell of this embodiment manufactured in this way was kept to 60°C to 85°C, a steam-reformed methane gas whose humidity and temperature were regulated to adjust its dew point (steam partial pressure) and whose carbon monoxide concentration was reduced to 50 ppm or below was supplied to the fuel electrode side and air humidified and heated so as to have a dew point of 50°C to 80°C was supplied to the air electrode side. The composition of the dry-based methane reformed gas in a steady operating state at this time was H₂: approximately 79%, CO₂: approximately 20%, N₂: approximately 1%, CO: approximately 20 ppm.

It was discovered that this embodiment was more effective in the case where the fuel gas included carbon dioxide which has lower diffusivity than hydrogen or the case where the fuel utilization rate was high and a better gas distribution characteristic was required.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured.

Table 3 shows the results of power generation tests in this embodiment. For comparison, the result of an operating condition other than that described above is shown in Table 4.

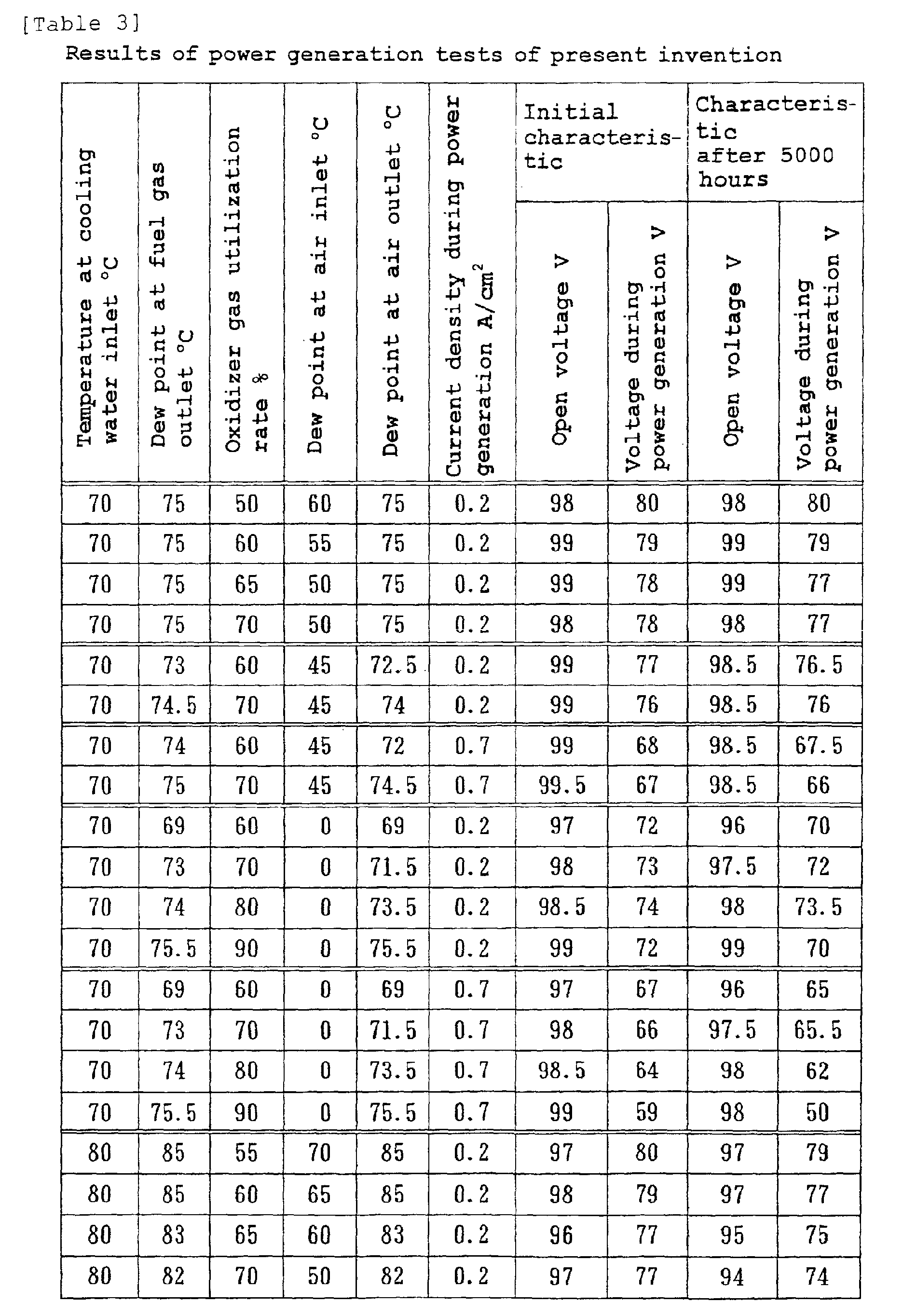

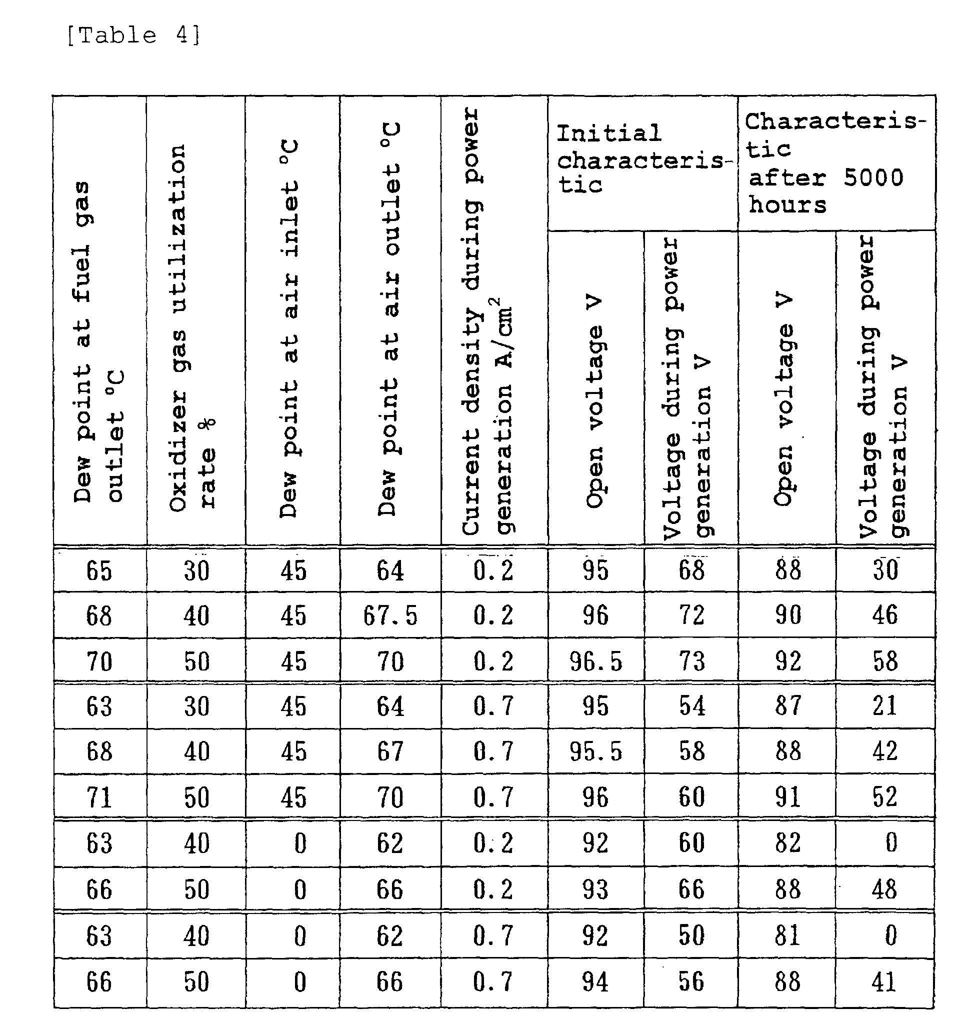

From the result in Embodiment 2-1, it has been discovered that for high current density power generation, when the cell was operated with an oxidizer gas utilization rate increased to approximately 90%, the performance deteriorated due to flooding 5000 hours later, and therefore it would be effective to change the oxidizer gas utilization rate according to a current density and use a higher oxidizer gas utilization rate for a lower current density.

Furthermore, pressure losses of the oxidizer gas and fuel gas duringpower generation at 0 . 2 A/cm² were measured. When the oxidizer gas utilization rate was 40% and dew point at the air inlet was 45°C, pressure loss at the cell inlet on the oxidizer gas side was 80 mmAq and pressure loss at the fuel gas inlet was 100 mmAq. Furthermore, pressure loss (pressure loss of heat exchanger) at the outlet of the fuel cell stack was 40 mmAq on the oxidizer gas side and 20 mmAq on the fuel gas side. Therefore, pressure loss of only the fuel cell stack was 40 mmAq on the oxidizer gas side and 80 mmAq on the fuel gas side.

Likewise, during power generation at 0.2 A/cm² with the oxidizer gas utilization rate being 60% and dew point at the air inlet being 0°C, pressure loss at the cell inlet on the oxidizer gas side was 50 mmAq and pressure loss at the fuel gas inlet was 80 mmAq. Furthermore, pressure loss (pressure loss of heat exchanger) at the outlet of the fuel cell stack was 30 mmAq on the oxidizer gas side and 10 mmAq on the fuel gas side. Therefore, pressure loss of only the fuel cell stack was 20 mmAq on the oxidizer gas side and 70 mmAq on the fuel gas side.

From the above-described result, it has been discovered that setting greater pressure loss of the gas supplied to the fuel cell stack on the fuel gas side than the oxidizer gas side would be better from the standpoint of the distribution characteristic, etc.

Furthermore , it has be en discovered that the dew point at the outlet of the oxidizer gas and that of the fuel gas would be almost the same when the substantial flow direction of the oxidizer gas and that of the fuel gas were parallel. From this result, it was also discovered that the moving speed of water in the polyelectrolyte membrane was quite high. Furthermore, it has also been discovered that the dew point at the outlet of the supply gas would remain almost the same without depending on the current density if the dew point at the inlet of the supply gas and utilization rate of the supply gas remained the same. However, in the case of a high oxidizer gas utilization rate of approximately 80% or more, when a comparison was made between performance at a low current density and that at a high current density, full performance was demonstrated for a low current density even if the oxidizer gas utilization rate was 90%, while for a high current density, deterioration of performance was confirmed at the oxidizer gas utilization rate of 90%. From this, it has been discovered that the optimum oxidizer gas utilization rate would vary depending on the current density and it would be necessary to change the oxidizer gas utilization rate according to the current density for an optimum operation.

### (Embodiment 2-2)

First, an electrode/membrane assembly was created using the same method as that in Embodiment 2-1. Then, a separator was created using the same method as that in Embodiment 2-1 and a cell was assembled in the like manner. Here, the system was constructed in such a way that the oxidizer gas would enter the oxidizer gas inlet manifold hole (1), flow through the oxidizer gas channel groove (7), go out of the oxidizer gas outlet manifold hole (2), while the fuel gas would enter the fuel gas inlet manifold hole (3) , flow through the fuel gas channel groove (8) , go out of the fuel gas outlet manifold hole (4). Therefore, the setting was made so that the substantial upstream section of the fuel gas and the substantial upstream section of the oxidizer gas would be oriented in the same direction while the substantial downstream section of the fuel gas and the substantial downstream section of the oxidizer gas would be oriented in the same direction. Moreover, the setting was made so that the cooling water would enter the cooling water outlet manifold hole (6) , flow through the cooling water channel groove (9), go out of the cooling water inlet manifold hole (5). Therefore, the setting was made so that the substantial upstream section of the fuel gas, the substantial upstream section of the oxidizer gas and the substantial downstream section of the cooling water would be oriented in the same direction while the substantial downstream section of the fuel gas, the substantial downstream section of the oxidizer gas and the substantial upstream section of the cooling water would be oriented in the same direction. That is, the setting was made so that fuel gas and the oxidizer gas would flow in parallel and only the cooling water would flow in the opposite direction . Furthermore, the exhaust gases were released into an atmosphere at the outlets of the respective gases to minimize aback pressure applied. Furthermore, the fuel cell stack was set so that the substantial upstream sections of the oxidizer gas and fuel gas were located upside and their substantial downstream sections were located downside. Thus, with regard to the cooling water, the fuel cell stack was set so that its substantial upstream section was located downside and its substantial downstream section was located upside.

The temperature in the vicinity of the cooling water inlet of the polyelectrolyte type fuel cell of this embodiment manufactured in this way was kept to 70°C, the temperature in the vicinity of the cooling water outlet was controlled to be 75°C by adjusting the flow rate of the cooling water, a steam-reformed methane gas whose humidity and temperature were regulated to adjust its dewpoint (steampartial pressure) to 70°C and whose carbon monoxide concentration was reduced to 50 ppm or below was supplied to the fuel electrode side and air humidified and heated so as to have a dew point of 45°C or dry air (dew point 0°C) was supplied to the air electrode side. The composition of the dry-based methane reformed gas in a steady operating state at this time was H₂: approximately 79%, CO₂: approximately 20%, N₂: approximately 1%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic and dew points at the outlets of the oxidizer gas and fuel gas were measured.

As a consequence, a result similar to or better than the result shown in Embodiment 2-1 was obtained and it has been confirmed that the flow direction of the cooling water had little influence on the present invention and having the cooling water flow direction opposite to the flow of the oxidizer gas and fuel gas would be rather desirable depending on the operating condition. Furthermore, the fuel cell stack was set so that the flow of the oxidizer gas and fuel gas was parallel to the gravity direction while the flow of the cooling water was opposite to the gravity direction, but it was confirmed that there was no problem.

Furthermore, pressure loss of the supply gas was measured as in the case of Embodiment 2-1 and almost the same result as that of Embodiment 2-1 was obtained.

### (Comparative example)

For comparison, a configuration example not based on the present invention where the flow of the oxidizer gas is opposite to the flow of the fuel gas will be shown.

First, an electrode/membrane assembly was created by using the same method as that in Embodiment 2-1. Then, a separator was created using the same method as that in Embodiment 2-1 and a cell was assembled in the like manner. Here, the system was constructed in such a way that the oxidizer gas would enter the oxidizer gas inlet manifold hole (1) , flow through the oxidizer gas channel groove (7), go out of the oxidizer gas outlet manifold hole (2), while the fuel gas would enter the fuel gas outletmanifoldhole (4) , flow through the fuel gas channel groove (8), go out of the fuel gas inlet manifold hole (3). Therefore, the setting was made so that the substantial upstream section of the fuel gas and the substantial downstream section of the oxidizer gas would be oriented in the same direction while the substantial downstream section of the fuel gas and the substantial upstream section of the oxidizer gas would be oriented in the same direction. Thus, the setting was made so that the flow of fuel gas was opposite to the flow of the oxidizer gas.

Moreover, the setting was made so that the cooling water would enter the cooling water inlet manifold hole (5) , flow through the cooling water channel groove (9) , go out of the cooling water outlet manifold hole (6). That is, the system was arranged so that the fuel gas and oxidizer gas would flow in opposite directions, while the cooling water would flow in parallel to the oxidizer gas. Furthermore, the exhaust gases were released into an atmosphere at the outlets of the respective gases to minimize a back pressure applied. Furthermore, the fuel cell stack was set so that the substantial upstream section of the fuel gas was located upside and its substantial downstream section was located downside. Thus, with regard to the oxidizer gas and the cooling water, the fuel cell stack was set so that its substantial upstream section was downside and its substantial downstream section was upside.

The temperature in the vicinity of the cooling water inlet of the polyelectrolyte type fuel cell of this example manufactured in this way was kept to 70°C, the temperature in the vicinity of the cooling water outlet was controlled to be 75°C by adjusting the flow rate of the cooling water, a steam-reformed methane gas whose humidity and temperature were regulated to adjust its dew point (steam partial pressure) to 70°C and whose carbon monoxide concentration was reduced to 50 ppm or below was supplied to the fuel electrode side and air humidified and heated so as to have a dew point of 45°C or dry air (dew point 0°C) was supplied to the air electrode side. The composition of the dry-based methane reformed gas in a steady operating state at this time was H₂: approximately 79%, CO₂: approximately 20%, N₂: approximately 1%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic and dew points at the outlets of the oxidizer gas and fuel gas were measured. Table 5 shows the result.

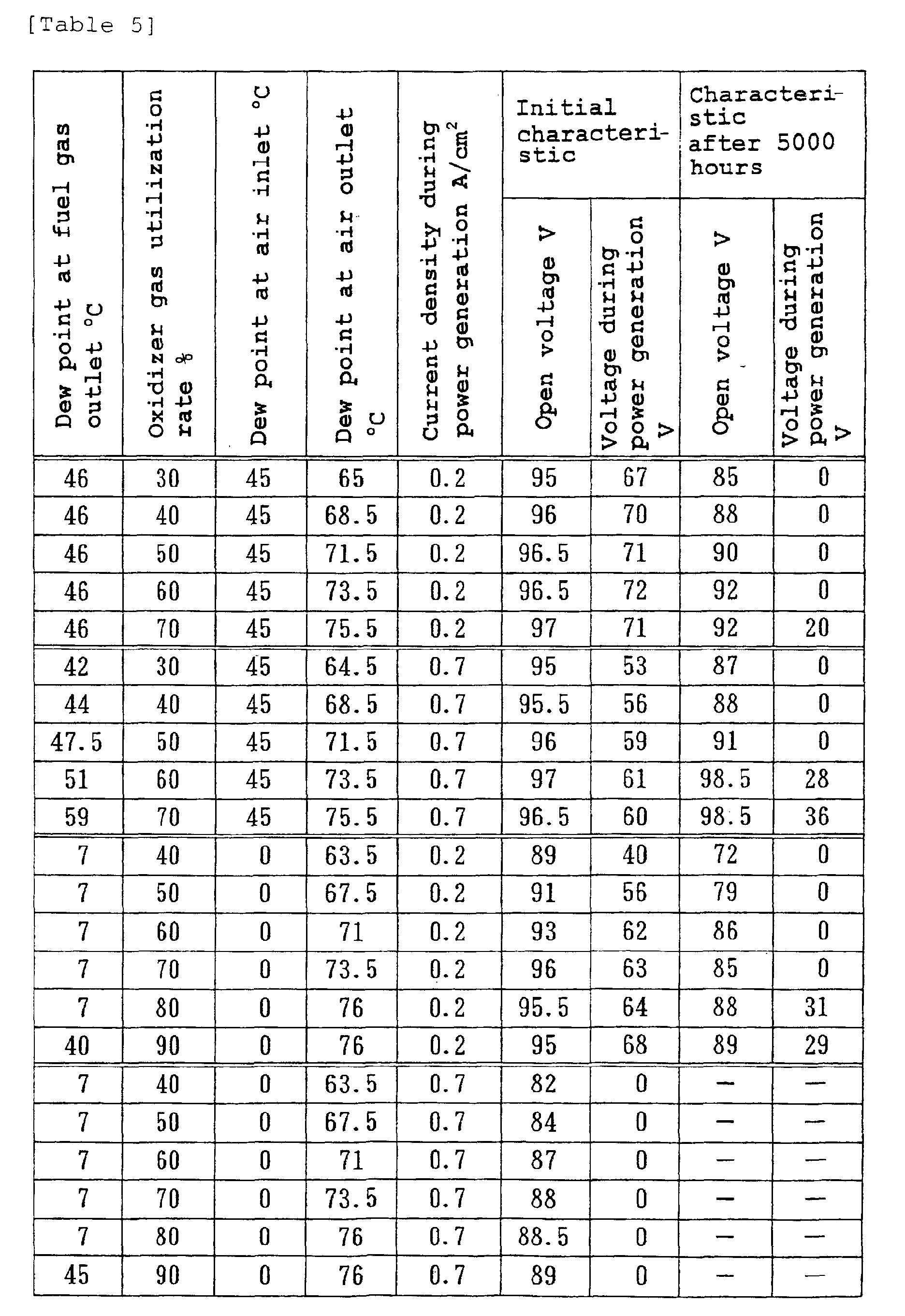

Furthermore, for comparison, the setting direction of the fuel cell stack was changed and the fuel cell stack was set so that the substantial upstream sections of the oxidizer gas and cooling water were upside and their substantial downstream sections were downside and a test was conducted for the second time. Thus, with regard to the fuel gas, the fuel cell stack was set so that the substantial upstream section was downside and its substantial downstream section was upside.

As a result, the voltage of each cell during power generation varied drastically and polarities of some cells were inverted, which even prevented measurement of the characteristic thereof. Thus, with regard to the fuel gas, it has been discovered that the fuel cell stack should be arranged so that the substantial upstream section would be upside and its substantial downstream section would be downside and the fuel gas would flow in the gravity direction.

However, a similar test was conducted by decreasing the cross-sectional area of the channel of the separator on the fuel gas supply side to increase pressure loss during fuel gas supply or increasing a current density to increase the flow rate of the fuel gas or decreasing the fuel utilization rate to increase the flow rate of the fuel gas, and as a result it has been discovered that in the case of a fuel cell stack or cell operating condition having high pressure loss of fuel gas supply of 300 mmAq or more, the flow direction of the fuel gas would need not be set in the gravity direction and that the cell was fully operable even if the flow direction of the fuel gas was opposite to the gravity direction.

### (Embodiment 2-3)

First, an electrode/membrane assembly was created using the same method as that in Embodiment 2-1. Then, a configuration of a separator will be shown. All separators were created to have dimensions of 20 cm × 32 cm, 1.4 mm in thickness, provided with a gas channel and a cooling water channel of 0.5 mm in depth and by cutting a resin-impregnated graphite plate.

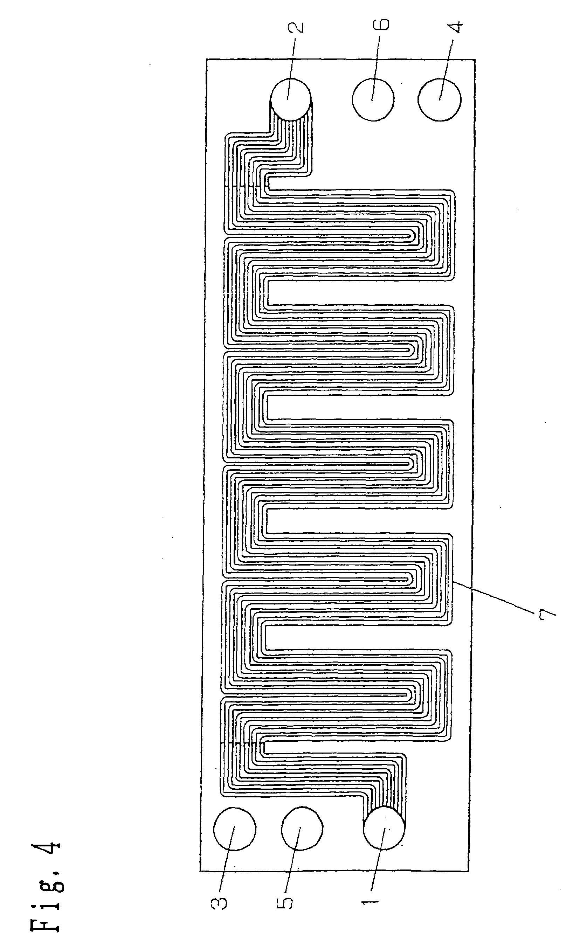

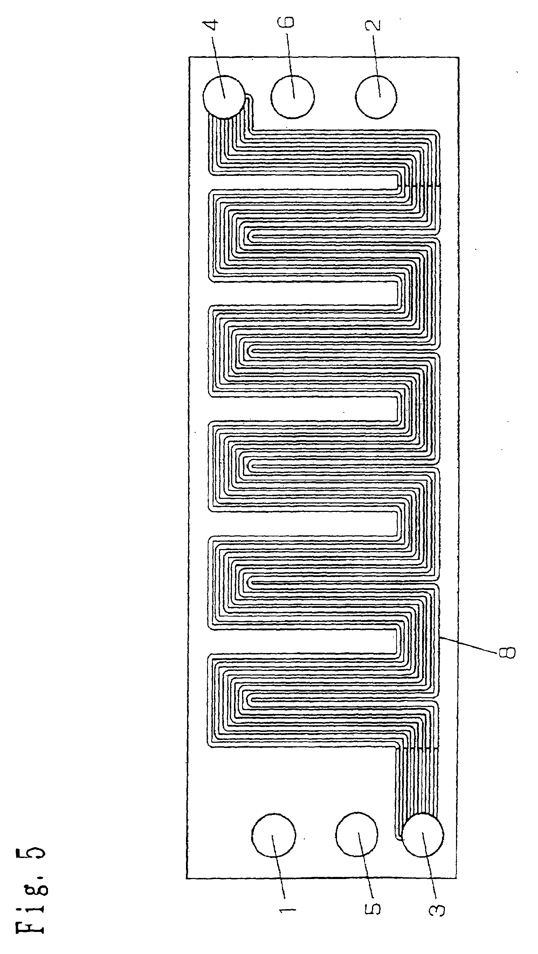

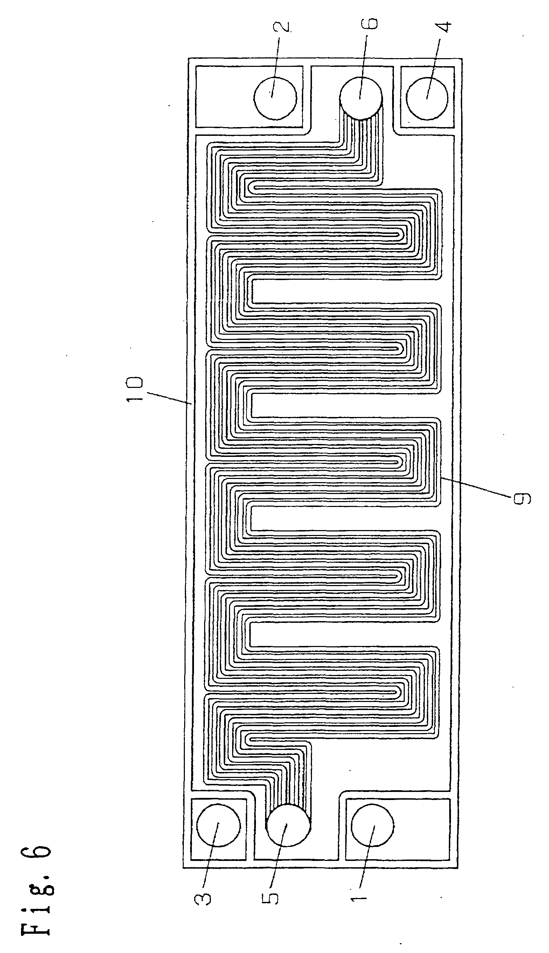

As a first separator, the process shown in FIG. 4 was applied to its one side and the process shown in FIG. 5 was applied to its other side to create a C/A separator with an oxidizer gas flowing on the one side and a fuel gas flowing on the other side. As a second separator, the process shown in FIG. 4 was applied to its one side and the process shown in FIG. 6 was applied to its other side to create a C/W separator with an oxidizer gas flowing on the one side and cooling water flowing on the other side. As a third separator, the process shown in FIG. 5 was applied to its one side and the process shown in FIG. 6 was applied to its other side to create an A/W separator with a fuel gas flowing on the one side and cooling water flowing on the other side. Here, the sides of the C/W separator and A/W separator on which the cooling water flows were pasted to each other with an adhesive applied in the connection sealing section (10) to create a C/W/A separator with the oxidizer gas flowing on the one side, the fuel gas flowing on the other side and the cooling water flowing inside the separator.

By using two C/A separators, the side of the one separator on which an oxidizer gas channel is formed is pasted to one side of the MEA sheet and the side of the other separator on which a fuel gas channel is formed is pasted to the other side of the MEA sheet to create a single cell. After two of these single cells are stacked, this two-layered cell is sandwiched by the C/W/A separators in which a groove for a cooling water channel is formed, this pattern is repeated to create a cell stack of 100 layered cells. At this time, both ends of the cell stack were fixed by a stainless steel current collector plate, insulator of an electric insulating material and further an end plate and fastening rod. The fastening pressure at this time was set to 10 kgf/cm² per area of the separator.

Here, the system was constructed in such a way that the oxidizer gas would enter the oxidizer gas inlet manifold hole (1) , flow through the oxidizer gas channel groove (7), go out of the oxidizer gas outlet manifold hole (2), while the fuel gas would enter the fuel gas inlet manifold hole (3), flow through the fuel gas channel groove (8), go out of the fuel gas outlet manifold hole (4). Therefore, the setting was made so that the substantial upstream section of the fuel gas and the substantial upstream section of the oxidizer gas would be oriented in the same direction while the substantial downstream section of the fuel gas and the substantial downstream section of the oxidizer gas would be oriented in the same direction. Moreover, the setting was made so that the cooling water would enter the cooling water inlet manifold hole (5) , flow through the cooling water channel groove (9) and go out of the cooling water outlet manifold hole (6).

Therefore, the setting was made so that the substantial upstream section of the fuel gas, the substantial upstream section of the oxidizer gas and the substantial upstream section of the cooling water would be oriented in the same direction while the substantial downstream section of the fuel gas, the substantial downstream section of the oxidizer gas and the substantial downstream section of the cooling water would be oriented in the same direction. That is, the setting was made so that the oxidizer gas, fuel gas and cooling water would flow in parallel. Furthermore, the exhaust gases were released into an atmosphere at the outlets of the respective gases to minimize a back pressure applied.

The temperature in the vicinity of the cooling water inlet of the polyelectrolyte type fuel cell of this embodiment manufactured in this way was kept to 75°C, the temperature in the vicinity of the cooling water outlet was controlled to be 80°C by adjusting the flow rate of the cooling water, a steam-reformed methane gas whose humidity and temperature were regulated to adjust its dew point (steam partial pressure) to 75°C and whose carbon monoxide concentration was reduced to 50 ppm or below was supplied to the fuel electrode side and dry air (dew point 0°C) was supplied to the air electrode side. The composition of the dry-based methane reformed gas in a steady operating state at this time was H₂: approximately 79%, CO₂: approximately 20%, N₂: approximately 1%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured. Table 6 shows the results of the power generation tests of this embodiment.

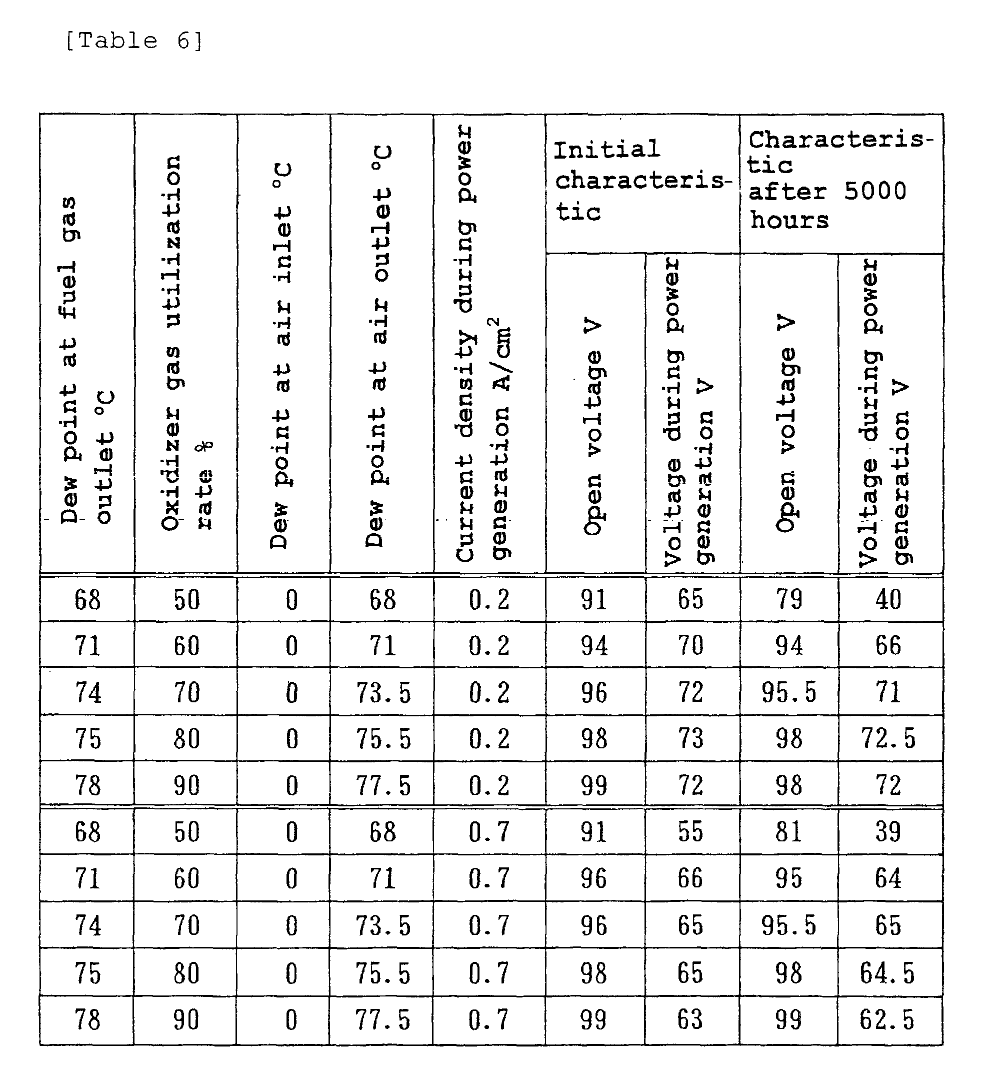

### (Embodiment 2-4)

First, an electrode/membrane assembly was created using the same method as that in Embodiment 2-1. Then, separators were created using the same method as that in Embodiment 2-3, an electric cell was assembled and set in the same way so that a gas and cooling water would flow in parallel.

The temperature in the vicinity of the cooling water inlet of the polyelectrolyte type fuel cell of this embodiment manufactured in this way was kept to 85°C, the temperature in the vicinity of the cooling water outlet during power generation was controlled to be 90°C by adjusting the flow rate of the cooling water, a steam-reformed methane gas whose humidity and temperature were regulated to adjust its dew point (steam partial pressure) to 85°C and whose carbon monoxide concentration was reduced to 50 ppm or below was supplied to the fuel electrode side and dry air (dew point 0°C) was supplied to the air electrode side. The composition of the dry-based methane reformed gas in a steady operating state at this time was H₂: approximately 79%, CO₂: approximately 20%, N₂: approximately 1%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured. Table 7 shows the results of the power generation tests of this embodiment.

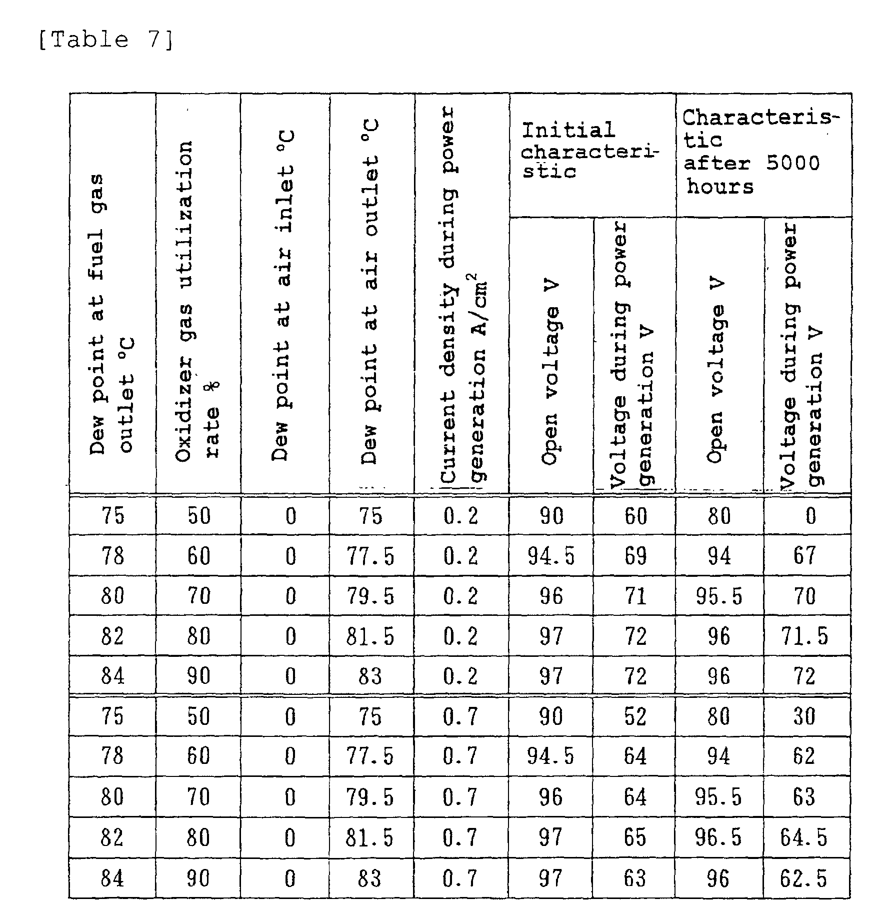

### (Embodiment 2-5)

First, an electrode/membrane assembly was created using the same method as that in Embodiment 2-1. Then, separators were created using the same method as that in Embodiment 2-3, an electric cell was assembled and set in the same way so that a gas and cooling water would flow in parallel.

The temperature in the vicinity of the cooling water inlet of the polyelectrolyte type fuel cell of this embodiment manufactured in this way was kept to 60°C, the temperature in the vicinity of the cooling water outlet during power generation was controlled to be 65°C by adjusting the flow rate of the cooling water, a steam-reformedmethane gas whose humidity and temperature were regulated to adjust its dew point (steam partial pressure) to 60°C and whose carbon monoxide concentration was reduced to 50 ppm or below was supplied to the fuel electrode side and dry air (dew point 0°C) was supplied to the air electrode side. The composition of the dry-basedmethane reformed gas in a steady operating state at this time was H₂: approximately 79% , CO₂: approximately 20%, N₂: approximately 1%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured. Table 8 shows the results of the power generation tests of this embodiment.

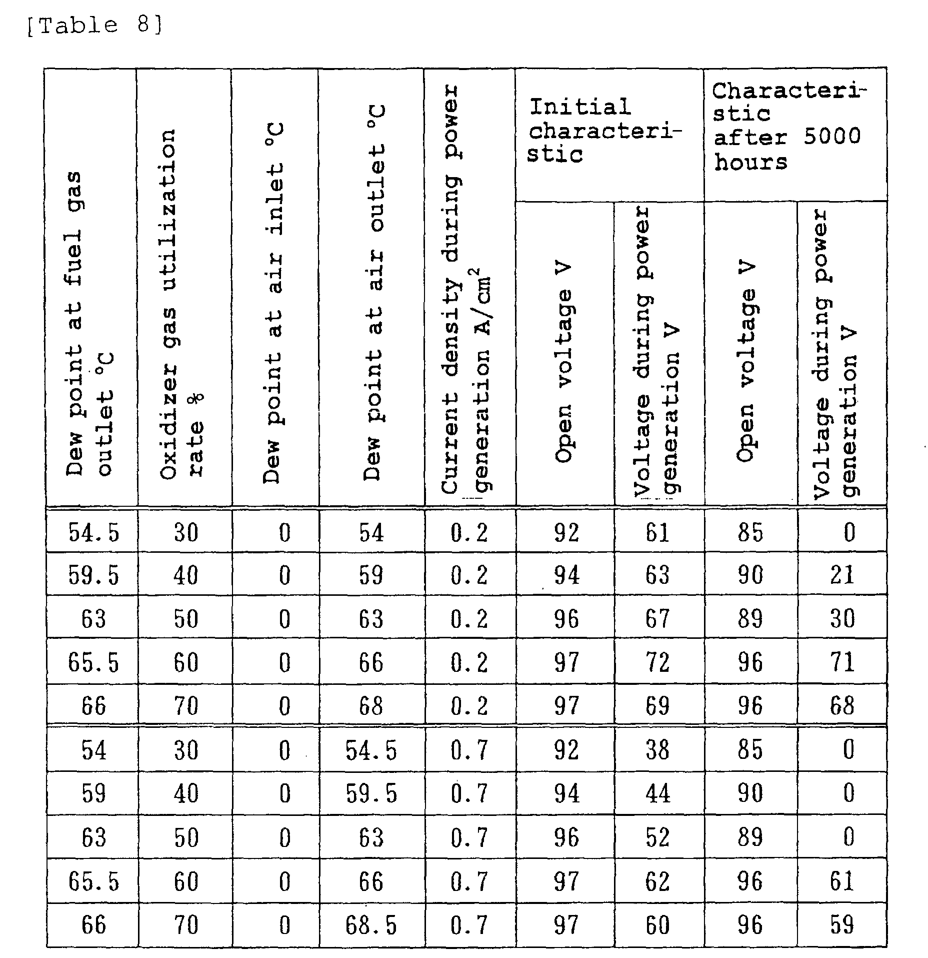

### (Embodiment 2-6)

First, an electrode/membrane assembly was created using the same method as that in Embodiment 2-1. Then, separators were created using the same method as that in Embodiment 2-3, an electric cell was assembled and set in the same way so that gas and cooling water would flow in parallel.

The temperature in the vicinity of the cooling water inlet of the polyelectrolyte type fuel cell manufactured in this way was kept, for comparison, to 45°C, which is a temperature equal to or lower than that of the present invention, the temperature in the vicinity of the cooling water outlet during power generation was controlled to be 50°C by adjusting the flow rate of the cooling water, a pure hydrogen gas whose humidity and temperature were regulated to adjust its dew point (steam partial pressure) to 45°C was supplied to the fuel electrode side and dry air (dew point 0°C) was supplied to the air electrode side. Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured. Table 9 shows the results of the power generation tests of this embodiment.

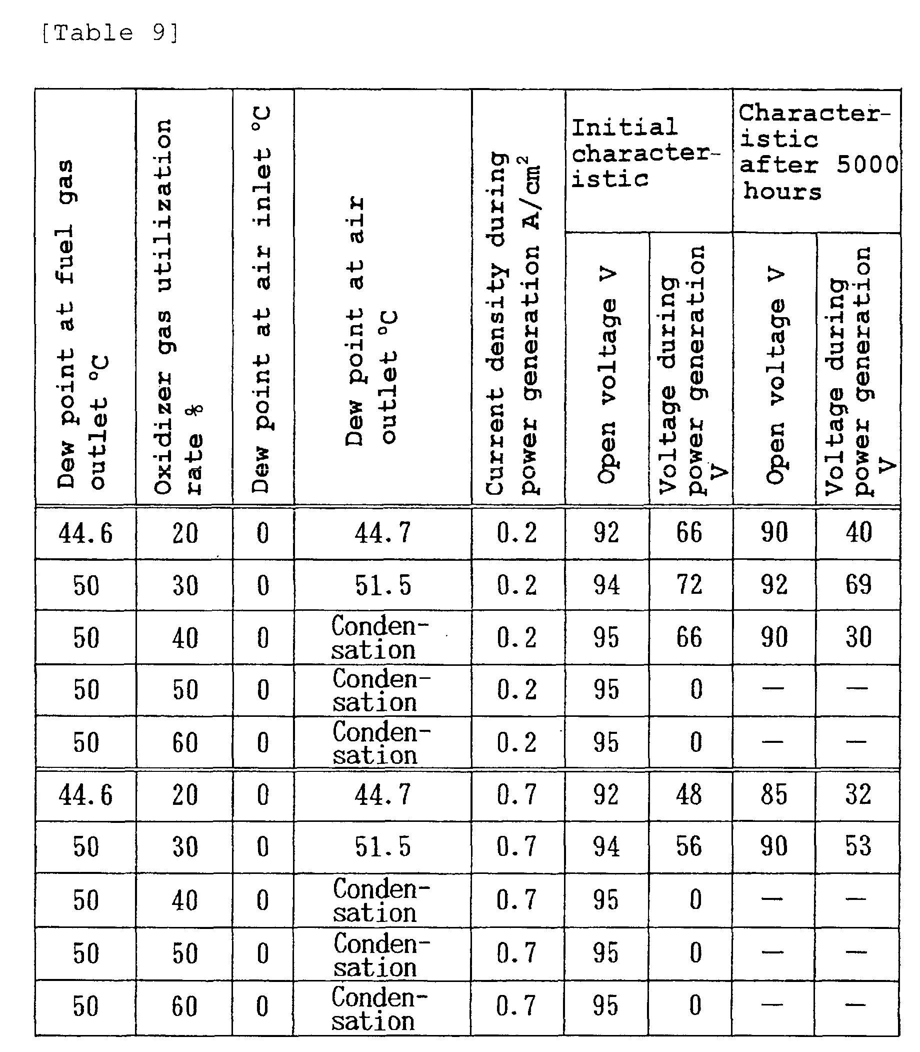

As described above, it has been discovered that the oxidizer gas utilization rate should be reduced when the temperature at the cooling water inlet or average cell temperature was lower than 60°C and a utilization rate equal to or greater than 60% would adversely affect the operation. The parallel flow meant in the present invention naturally applies to the case where the oxidizer gas and fuel gas have substantially the same direction with respect to relationship between the inlet and outlet. As is apparent from the foregoing embodiments, even if there were partially opposite flows or orthogonal flows, effects were obtained if there was at least an overall consistent gas flow direction as a whole on the entire plane of a separator.

### (Embodiment 2-7)

First, an electrode/membrane assembly was created using the same method as that in Embodiment 2-1. Then, a configuration of a separator will be shown. All separators were created by cutting a resin-impregnated graphite plate to have dimensions of 20 cm × 32 cm, 1.4 mm in thickness, provided with a gas channel and cooling water channel of 0.5 mm in depth.

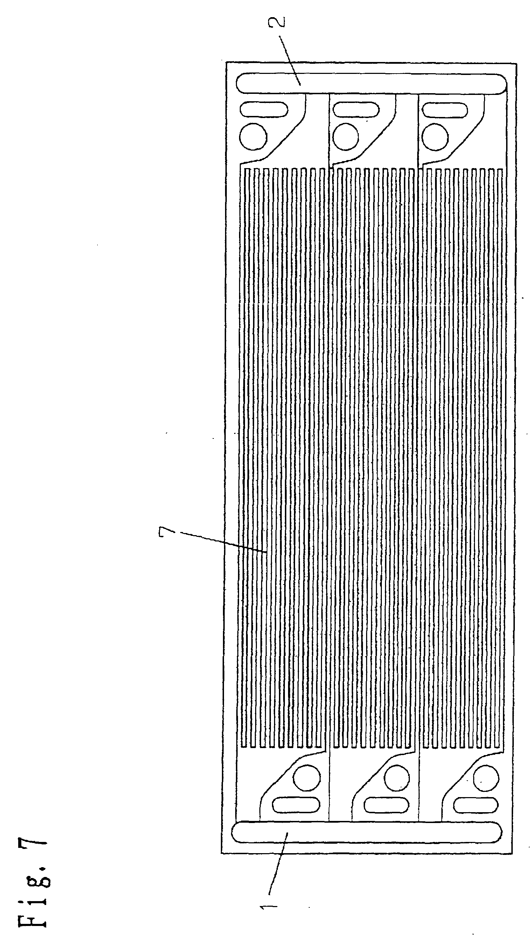

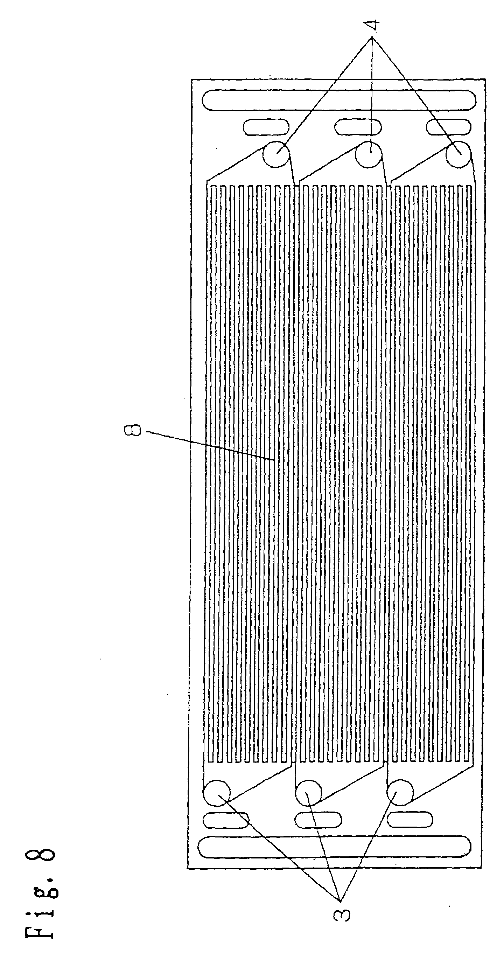

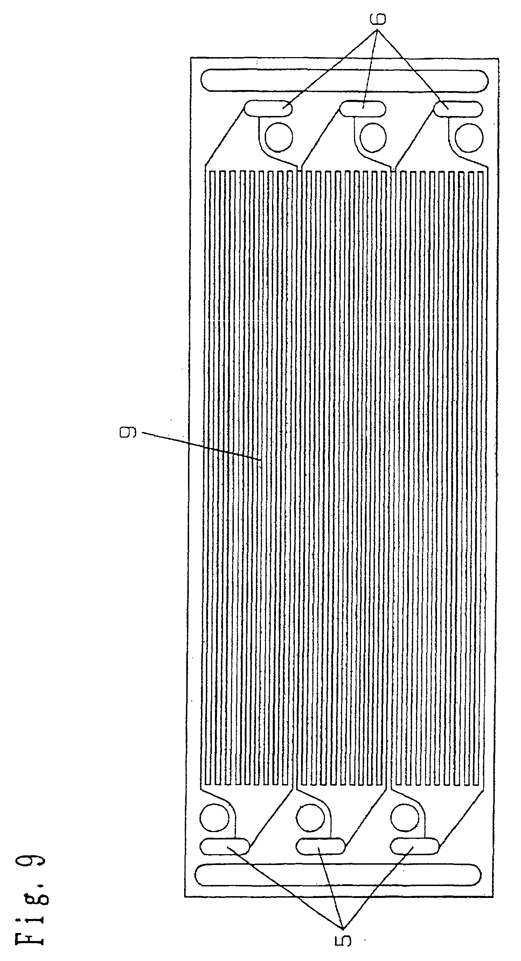

As a first separator, the process shown in FIG. 7 was applied to its one side and the process shown in FIG. 8 was applied to its other side to create a C/A separator with an oxidizer gas flowing on the one side and a fuel gas flowing on the other side. As a second separator, the process shown in FIG. 7 was applied to its one side and the process shown in FIG. 9 was applied to its other side tocreate a C/Wseparatorwith theoxidizergas flowing on the one side and the cooling water flowing on the other side. As a third separator, the process shown in FIG. 8 was applied to its one side and the process shown in FIG. 9 was applied to its other side to create an A/W separator with the fuel gas flowing on the one side and the cooling water flowing on the other side. Here, the sides of the C/W separator and A/W separator on which the cooling water flows were pasted to each other with an adhesive applied in the connection sealing section to create a C/W/A separator with the oxidizer gas flowing on one side, a fuel gas flowing on the other side and the cooling water flowing inside the separator.

Using two C/A separators, one side of the one separator on which an oxidizer gas channel is formed is pasted to one side of the MEA sheet and the one side of the other separator on which a fuel gaschannel is formed is pasted to the back of the MEA sheet to create a single cell. After two of these single cells are stacked, this two-layered cell is sandwiched by the C/W/A separators in which a groove for a cooling water channel is formed, this pattern is repeated to create a cell stack of 100 layered cells. At this time, both ends of the cell stack were fixed by a stainless steel current collector plate, insulator of an electric insulating material and further an end plate and fastening rod. The fastening pressure at this time was set to 10 kgf/cm² per area of the separator.

Here, the system was constructed in such a way that the oxidizer gas would enter the oxidizer gas inlet manifold hole (1) , flow through the oxidizer gas channel groove (7), go out of the oxidizer gas outlet manifold hole (2), while the fuel gas would enter the fuel gas inlet manifold hole (3), flow through the fuel gas channel groove (8) , go out of the fuel gas outlet manifold hole (4). Therefore, the setting was made so that the substantial upstream section of the fuel gas and the substantial upstream section of the oxidizer gas would be oriented in the same direction while the substantial downstream section of the fuel gas and the substantial downstream section of the oxidizer gas would be oriented in the same direction. Moreover, the setting was made so that the cooling water would enter the cooling water inlet manifold hole (5) , flow through the cooling water channel groove (9), go out of the cooling water outlet manifold hole (6). Therefore, the setting was made so that the substantial upstream section of the fuel gas, the substantial upstream section of the oxidizer gas and the substantial upstream section of the cooling water would be oriented in the same direction while the substantial downstream section of the fuel gas, the substantial downstream section of the oxidizer gas and the substantial downstream section of the cooling water would be oriented in the same direction. That is, the setting was made so that the oxidizer gas, fuel gas and cooling water would flow in parallel. Furthermore, the exhaust gases were released into an atmosphere at the outlets of the respective gases to minimize a back pressure applied.

The temperature in the vicinity of the cooling water inlet of the polyelectrolyte type fuel cell of this embodiment manufactured in this way was kept to 75°C, the temperature in the vicinity of the cooling water outlet was controlled to be 80°C during power generation by adjusting the flow rate of the cooling water, a steam-reformed methane gas whose humidity and temperature were regulated to adjust its dew point (steam partial pressure) to 75°C and whose carbon monoxide concentration was reduced to 50 ppm or below was supplied to the fuel electrode side and dry air (dew point 0°C) was supplied to the air electrode side. The composition of the dry-based methane reformed gas in a steady operating state at this time was H₂: approximately 79%, CO₂: approximately 20%, N₂: approximately 1%, CO: approximately 20 ppm.

The composition of the dry-based methane reformed gas in a steady operating state at this time was H2: approximately 79%, CO2: approximately 20%, N2: approximately 1%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured. Table 10 shows the results of the power generation tests of this embodiment.

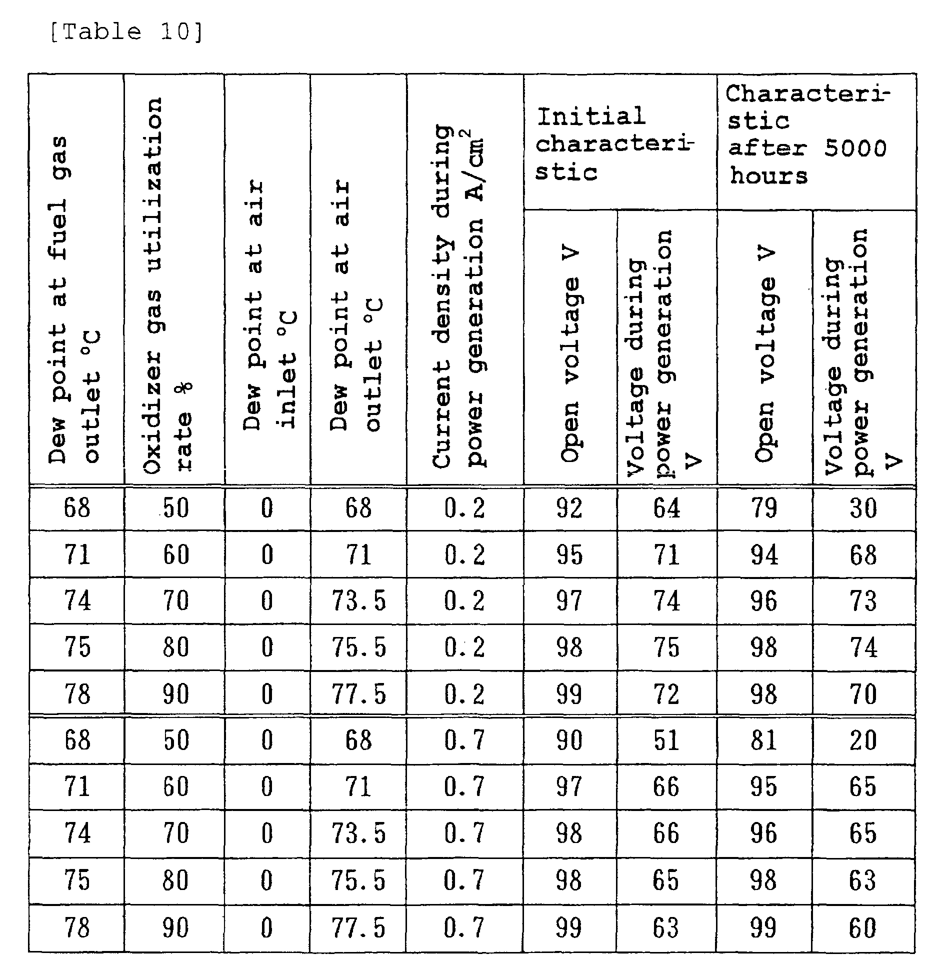

From the above-described embodiment, it has been discovered that both when the dew point at the outlet of the fuel gas and the dew point at the outlet of the oxidizer gas are lower than the cell average operating temperature or temperature at the cooling water inlet by 5°C or more and therefore a good cell characteristic and life characteristic could be obtained by keeping within 5°C . It has been discovered that when the dew point of the oxidizer gas to be supplied was low, it would be necessary to increase the oxidizer gas utilization rate and allow the oxidizer gas to flow parallel to the fuel gas to realize this.

### (Embodiment 2-8)

First, an electrode/membrane assembly was created using the same method as that in Embodiment 2-1. Then, separators were created using the same method as that in Embodiment 2-3, an electric cell was assembled and set in the same way so that a gas and cooling water would flow in parallel.

The temperature in the vicinity of the cooling water inlet of the polyelectrolyte type fuel cell of this embodiment manufactured in this way was kept to 70°C, the temperature in the vicinity of the cooling water outlet during power generation was controlled to be 80°C by adjusting the flow rate of the cooling water, a partially oxidized reformed methane gas whose humidity and temperature were regulated to adjust its dew point (steam partial pressure) to 65°C and whose carbon monoxide concentration was reduced to 50 ppm or below was supplied to the fuel electrode side and air humidified to a dew point of 60°C was supplied to the air electrode side. The composition of the dry-based methane reformed gas in a steady operating state at this time was H₂: approximately 52%, CO₂: approximately 43%, N₂: approximately 5%, CO: approximately 20 ppm.

Consecutive power generation tests were conducted on this cell under a condition with a fuel utilization rate of 70%, with an oxygen utilization rate controlled by adjusting the flow rate of the oxidizer gas and with a current density of 0.2 A/cm² and 0.7 A/cm² and a time variation of its output characteristic, and dew points at the outlets of the oxidizer gas and fuel gas were measured.

Table 11 shows the results of the power generation tests of this embodiment and a comparative example not based on the present invention.

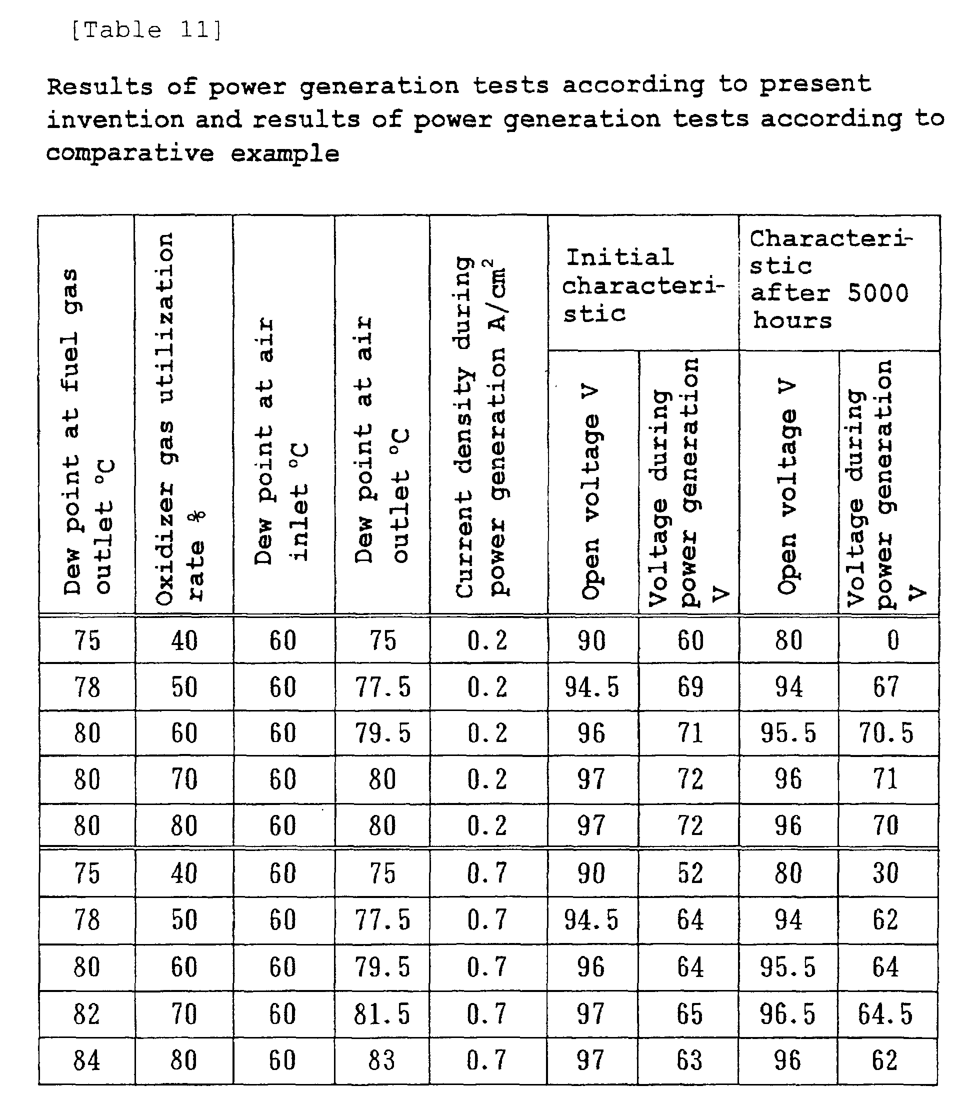

Furthermore, at the same time a pure hydrogen gas was used as the fuel gas, humidified to a dew point of 65°C to 80°C and supplied, and subjected to the same tests. As a result, it has been discovered that when the pure hydrogen gas was used as the fuel gas, if the pure hydrogen was consumed on the fuel electrode side, the remaining gas was steam only, and therefore performance deterioration due to fuel starvation hardly occurred even if there was insufficient distribution, and since a carbon dioxide gas in particular has a poor diffusion characteristic, the present invention was proven to be quite effective when the dry-based content of carbon dioxide was 15% or more.

Summarizing the foregoing embodiments, it has been discovered that the condition under which the present invention is proven most conspicuously effective would be a condition where the temperature in the vicinity of the water inlet is 65°C or above and 80°C or below, a humidified fuel gas is supplied at a dew point which is 5°C to 10°C lower than the temperature at the cooling water inlet or temperature at the cooling water outlet, the utilization rate of the fuel gas is 70% to 80%, the fuel gas is a reformed gas containing carbon dioxide, the oxidizer gas is air and the air is humidified to a dew point 10°C to 20°C lower than the temperature at the cooling water inlet or temperature at the cooling water outlet and supplied. Under such a condition, a fuel cell with an oxidizer gas utilization rate set to 50% to 60%, a current density set to 0.2 to 0.7 A/cm², having a shape that allows the coflow gas to flow from top to down with respect to gravity was most effective.

### Industrial Applicability

As is apparent from the above explanations, the present invention can provide a polyelectrolyte type fuel cell capable of having an excellent initial characteristic and life characteristic and a method of operating the same.

## Claims

1. A polyelectrolyte type fuel cell comprising:
single cells having a pair of electrodes placed at positions sandwiching a hydrogen ion polyelectrolyte membrane and supplying/exhausting means of supplying/exhausting a fuel gas to/from one of said electrodes and supplying/exhausting an oxidizer gas to/from the other of said electrodes, which are stacked one atop another through a conductive separator; and
circulating means of circulating a cooling medium for cooling said electrodes, wherein
said polyelectrolyte type fuel cell adjusts at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell so that an inlet temperature (Twin (°C)) of said cooling medium or an outlet temperature (Twout (°C)) of the cooling medium becomes 60°C or higher.

2. The polyelectrolyte type fuel cell according to claim 1,
wherein at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that a total flow rate of the fuel gas (Vain (NL/min), including steam) to be supplied to the fuel gas inlet of said polyelectrolyte type fuel cell, a hydrogen gas content (ΔPah (atm), including steam) in said fuel gas supplied to said fuel gas inlet, a partial pressure (Δpain (atm)) of steam contained in said fuel gas to be supplied to said fuel gas inlet, a fuel gas utilization rate (Uf, where 0 ≤ Uf ≤ 1) of said polyelectrolyte type fuel cell, a dew point (Rain (°C)) of steam contained in said fuel gas supplied to said fuel gas inlet, a cell temperature (Tain (°C)) of said fuel gas inlet and a cell temperature (Taout (°C)) of the fuel gas outlet are set to satisfy Rain < Tain.

3. The polyelectrolyte type fuel cell according to claim 2,
**characterized in that** at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that Rain ≤ (Tain-5) is satisfied.

4. The polyelectrolyte type fuel cell according to claim 2,
**characterized in that** at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that (Tain-15) ≤ Rain ≤ (Tain-5) is satisfied.

5. The polyelectrolyte type fuel cell according to claim 2,
**characterized in that** at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that Raout ≤ (Taout+5) is satisfied, where Raout (°C) is a dewpoint in the vicinity of the fuel gas outlet obtained an approximate expression 22.921Ln (ΔPaout × 760)-53.988 from the steam partial pressure (ΔPaout (atm)) in the vicinity of the fuel gas outlet calculated by ΔPain/(1-Uf X ΔPah).

6. The polyelectrolyte type fuel cell according to any one of claims 1 to 5,
wherein said fuel gas and said oxidizer gas of said conductive separator circulate in the same direction,
at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that the cell temperature (Tcin (°C)) of said oxidizer gas supply section or the cell temperature (Tain (°C)) of said fuel gas supply section or the inlet temperature (Twin (°C)) of the coolingmedium or the outlet temperature (Twout (°C)) of the cooling medium becomes 60°C or higher, and
an oxidizer gas utilization rate (Uo, where 0 ≤ Uo ≤ 1) of said polyelectrolyte type fuel cell, a dew point (Rcin) of steam contained in said oxidizer gas supplied to the oxidizer gas inlet, the cell temperature (Tcin (°C)) of the oxidizer gas supply section and a cell temperature (Tcout) of the oxidizer gas outlet are set so that Rcin is kept at a temperature lower than Twin or Twout by 10°C or more.

7. The polyelectrolyte type fuel cell according to claim 5,
wherein said Rcin is kept at a temperature lower than Twin or Twout by 20°C or more.

8. The polyelectrolyte type fuel cell according to claim 6,
**characterized in that** the amount of said oxidizer gas supplied is adjusted in such a way that said Uo satisfies Uo ≥ 0.5 (50%).

9. The polyelectrolyte type fuel cell according to claim 6,
**characterized in that** said Rain is higher than said Rcin by 10°C or more and lower than said Twin or said Tain or said Taout or said Tcin or said Tcout.

10. The polyelectrolyte type fuel cell according to claim 6,
**characterized in that** said Uo is set to 0.6 (60%) or greater and 0.9 (90%) or smaller.

11. The polyelectrolyte type fuel cell according to any one of claims 1 to 10,
wherein said fuel gas and said oxidizer gas of said conductive separator circulate from top down with respect to gravity.

12. The polyelectrolyte type fuel cell according to any one of claims 1 to 11,
wherein the fuel gas and oxidizer gas exhausted from a cathode and anode are substantially left open to a normal pressure except an unavoidable portion corresponding to pressure loss of a portion where the fuel gas and oxidizer gas circulate.

13. The polyelectrolyte type fuel cell according to claim 6,
**characterized in that** a current value extracted from the cell is controlled in connection with said Uo so that said Uo is increased as said current value decreases.

14. The polyelectrolyte type fuel cell according to claim 6,
**characterized in that** said Twin or said Twout or said Tain or said Taout or said Tcin or said Tcout is set to 70°C or higher and 95°C or lower.

15. The polyelectrolyte type fuel cell according to any one of claims 1 to 14,
wherein a dry-based composition of said fuel gas contains a carbon dioxide gas of 15 volume % or more and 45 volume % or less or a fuel utilization rate is 0.7 (70%) or more.

16. A method of operating a polyelectrolyte type fuel cell comprising:
single cells having a pair of electrodes placed at positions sandwiching a hydrogen ion polyelectrolyte membrane and supplying/exhausting means of supplying/exhausting a fuel gas to/from one of said electrodes and supplying/exhausting an oxidizer gas to/from the other of said electrodes, which are stacked one atop another through a conductive separator; and
circulating means of circulating a cooling medium of cooling said electrodes, wherein
polyelectrolyte type fuel cell adjusts at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell so that an inlet temperature (Twin (°C)) of said cooling medium or an outlet temperature (Twout (°C)) of the cooling medium becomes 60°C or higher.

17. The method of operating a polyelectrolyte type fuel cell according to claim 16,
wherein said fuel gas and said oxidizer gas of said conductive separator circulate in the same direction,
at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that the cell temperature (Tcin (°C)) of said oxidizer gas supply section or the cell temperature (Tain (°C)) of said fuel gas supply section or the inlet temperature (Twin (°C)) of the cooling medium or the outlet temperature (Twout (°C)) of the cooling medium becomes 60°C or higher, and
an oxidizer gas utilization rate (Uo, where 0 ≤ Uo ≤ 1) of said polyelectrolyte type fuel cell, a dew point (Rcin) of steam contained in said oxidizer gas supplied to the oxidizer gas inlet, the cell temperature (Tcin (°C)) of the oxidizer gas supply section and a cell temperature (Tcout) of the oxidizer gas outlet are set so that Rcin is kept at a temperature lower than Twin or Twout by 10°C or more.

## Amended claims

### Amended claims under Art. 19.1 PCT

**1.** (amended) Apolyelectrolyte type fuel cell comprising:
single cells having a pair of electrodes placed at positions sandwiching a hydrogen ion polyelectrolyte membrane and supplying/exhausting means of supplying/exhausting a fuel gas to/from one of said electrodes and supplying/exhausting an oxidizer gas to/from the other of said electrodes, which are stacked one atop another through a conductive separator; and
circulating means of circulating a cooling medium for cooling said electrodes, wherein
said polyelectrolyte type fuel cell adjusts at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell so that an inlet temperature (Twin (°C)) of said cooling medium or an outlet temperature (Twout (°C)) of the cooling medium becomes 60°C or higher, and
a total flow rate of the fuel gas (Vain (NL/min), including steam) to be supplied to the fuel gas inlet of said polyelectrolyte type fuel cell, a hydrogen gas content (ΔPah (atm), including steam) in said fuel gas supplied to said fuel gas inlet, a partial pressure (Δpain (atm)) of steam contained in said fuel gas to be supplied to said fuel gas inlet, a fuel gas utilization rate (Uf, where 0 ≤ Uf ≤ 1) of said polyelectrolyte type fuel cell, a dew point (Rain (°C)) of steam contained in said fuel gas supplied to said fuel gas inlet, a cell temperature (Tain (°C)) of said fuel gas inlet and a cell temperature (Taout (°C)) of the fuel gas outlet are set to satisfy Rain < Tain.

**2.** (amended) The polyelectrolyte type fuel cell according to claim 1,
**characterized in that** at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that Rain ≤ (Tain-5) is satisfied.

**3.** (amended) The polyelectrolyte type fuel cell according to claim 1,
**characterized in that** at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that (Tain-15) ≤ Rain ≤ (Tain-5) is satisfied.

**4.** (amended) Thepolyelectrolyte type fuel cell according to claim 1,
**characterized in that** at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that Raout ≤ (Taout+5) is satisfied, where Raout (°C) is a dew point in the vicinity of the fuel gas outlet obtained an approximate expression 22.921Ln (ΔPaout × 760)-53.988 from the steam partial pressure (ΔPaout (atm)) in the vicinity of the fuel gas outlet calculated by Δpain/(1-Uf × Δpah).

**5.** (amended) The polyelectrolyte type fuel cell according to any one of claims 1 to 4,
wherein said fuel gas and said oxidizer gas of said conductive separator circulate in the same direction,
at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that the cell temperature (Tcin (°C)) of said oxidizer gas supply section or the cell temperature (Tain (°C)) of said fuel gas supply section or the inlet temperature (Twin (°C)) of the cooling medium or the outlet temperature (Twout (°C)) of the cooling medium becomes 60°C or higher, and
an oxidizer gas utilization rate (Uo, where 0 ≤ Uo ≤ 1) of said polyelectrolyte type fuel cell, a dew point (Rcin) of steam contained in said oxidizer gas supplied to the oxidizer gas inlet, the cell temperature (Tcin (°C)) of the oxidizer gas supply section and a cell temperature (Tcout) of the oxidizer gas outlet are set so that Rcin is kept at a temperature lower than Twin or Twout by 10°C or more.

**6.** (amended) Thepolyelectrolyte type fuel cell according to claim 4,
wherein said Rein is kept at a temperature lower than Twin or Twout by 20°C or more.

**7.** (amended) The polyelectrolyte type fuel cell according to claim 5,
**characterized in that** the amount of said oxidizer gas supplied is adjusted in such a way that said Uo satisfies Uo ≥ 0.5 (50%).

**8.** (amended) The polyelectrolyte type fuel cell according to claim 5,
**characterized in that** said Rain is higher than said Rcin by 10°C or more and lower than said Twin or said Tain or said Taout or said Tcin or said Tcout.

**9.** (amended) The polyelectrolyte type fuel cell according to claim 5,
**characterized in that** said Uo is set to 0.6 (60%) or greater and 0.9 (90%) or smaller.

**10.** (amended) The polyelectrolyte type fuel cell according to any one of claims 1 to 9,
wherein said fuel gas and said oxidizer gas of said conductive separator circulate from top down with respect to gravity.

**11.** (amended) The polyelectrolyte type fuel cell according to any one of claims 1 to 10,
wherein the fuel gas and oxidizer gas exhausted from a cathode and anode are substantially left open to a normal pressure except an unavoidable portion corresponding to pressure loss of a portion where the fuel gas and oxidizer gas circulate.

**12.** (amended) The polyelectrolyte type fuel cell according to claim 5,
**characterized in that** a current value extracted from the cell is controlled in connection with said Uo so that said Uo is increased as said current value decreases.

**13.** (amended) The polyelectrolyte type fuel cell according to claim 5,
**characterized in that** said Twin or said Twout or said Tain or said Taout or said Tcin or said Tcout is set to 70°C or higher and 95°C or lower.

**14.** (amended) The polyelectrolyte type fuel cell according to any one of claims 1 to 13,
wherein a dry-based composition of said fuel gas contains a carbon dioxide gas of 15 volume % or more and 45 volume % or less or a fuel utilization rate is 0.7 (70%) or more.

**15.** (amended) A method of operating a polyelectrolyte type fuel cell comprising:
single cells having a pair of electrodes placed at positions sandwiching a hydrogen ion polyelectrolyte membrane and supplying/exhausting means of supplying/exhausting a fuel gas to/from one of said electrodes and supplying/exhausting an oxidizer gas to/from the other of said electrodes, which are stacked one atop another through a conductive separator; and
circulating means of circulating a cooling medium of cooling said electrodes, wherein
polyelectrolyte type fuel cell adjusts at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell so that an inlet temperature (Twin (°C)) of said cooling medium or an outlet temperature (Twout (°C)) of the cooling medium becomes 60°C or higher.

**16.** (amended) The method of operating a polyelectrolyte type fuel cell according to claim 15,
wherein said fuel gas and said oxidizer gas of said conductive separator circulate in the same direction,
at least one selected from among an amount of said fuel gas supplied, an amount of said fuel gas humidified, an amount of said oxidizer gas supplied, an amount of said oxidizer gas humidified, a flow rate or temperature of said cooling medium or an output current value of the polyelectrolyte type fuel cell is adjusted in such a way that the cell temperature (Tcin (°C)) of said oxidizer gas supply section or the cell temperature (Tain (°C)) of said fuel gas supply section or the inlet temperature (Twin (°C)) of the cooling medium or the outlet temperature (Twout (°C)) of the cooling medium becomes 60°C or higher, and
an oxidizer gas utilization rate (Uo, where 0 ≤ Uo ≤ 1) of said polyelectrolyte type fuel cell, a dew point (Rcin) of steam contained in said oxidizer gas supplied to the oxidizer gas inlet, the cell temperature (Tcin (°C)) of the oxidizer gas supply section and a cell temperature (Tcout) of the oxidizer gas outlet are set so that Rcin is kept at a temperature lower than Twin or Twout by 10°C or more.
